# EUROPÄISCHE PATENTSCHRIFT

(11) **EP 2 350 479 B1**
(45) Veröffentlichungstag und Bekanntmachung des Hinweises auf die Patenterteilung: **26.12.2012**
(21) Anmeldenummer: 09740628.4
(22) Anmeldetag: 30.09.2009
(51) Int. Cl.: F16C 29/00

(54) **BEFESTIGUNGSSTRUKTUR UND VERFAHREN ZUM BEFESTIGEN EINER FÜHRUNGSSCHIENE EINES LINEAR FÜHRUNGSSYSTEMS**
FASTENING STRUCTURE AND METHOD FOR FASTENING A GUIDE RAIL OF A LINEAR GUIDANCE SYSTEM
STRUCTURE DE FIXATION ET PROCÉDÉ DE FIXATION D'UN RAIL DE GUIDAGE D'UN SYSTÈME DE GUIDAGE LINÉAIRE

(30) Priorität: 03.10.2008 EP 08405251
(43) Veröffentlichungstag der Anmeldung: 03.08.2011
(73) Patentinhaber: Schneeberger Holding AG, 4914 Roggwil (CH)
(72) Erfinder: WÜTHRICH, Michael, CH-8482 Sennhof (CH); WEISS, Lukas, CH-4054 Basel (CH); SCHNEEBERGER, Hans-Martin, CH-4900 Langenthal (CH)
(74) Vertreter: EGLI-EUROPEAN PATENT ATTORNEYS
(86) Internationale Anmeldenummer: PCT/CH2009/000313
(87) Internationale Veröffentlichungsnummer: WO 2010/037245

(56) Entgegenhaltungen:
- CH-A5- 591 641
- DE-A1-102005 003 153
- DE-A1-102007 015 152
- US-A- 4 628 756
- US-A1- 2006 029 309

## Beschreibung

Die Erfindung bezieht sich auf eine Befestigungsstruktur zum Befestigen einer Führungsschiene eines Linearführungssystems an einer vorgegebenen Position in einer vorgegebenen geraden Form, welche Führungsschiene eine Grundfläche und eine erste und eine zweite Seitenfläche aufweist, wobei die Seitenflächen an einander gegenüberliegenden Seiten der Führungsschiene ausgebildet sind. Die Erfindung bezieht sich weiterhin auf ein entsprechendes Verfahren zum Befestigen einer derartigen Führungsschiene.

Die Genauigkeit, mit der ein an der Führungsschiene eines Linearführungssystems geführter Körper (z.B. ein an der jeweiligen Führungsschiene über Wälzkörper abgestützter Führungswagen) positioniert werden kann, hängt wesentlich von der Genauigkeit ab, mit der die jeweilige Führungsschiene in eine vorgegebene Form gebracht und an einer vorgegebenen Position positioniert werden kann. Im Falle eines Linearführungssystems soll deshalb die jeweilige Führungsschiene idealerweise exakt parallel zu einer Geraden verlaufen oder auf eine vorbestimmte Weise innerhalb vorgegebener Toleranzen von einer Geraden abweichen.

Die Genauigkeit eines Linearführungssystems ist in der Regel limitiert, zumal bei der Herstellung von geraden Führungsschienen jeweils durch den Herstellungsprozess bedingte Toleranzen zu berücksichtigen sind oder Führungsschienen nach ihrer Herstellung, beispielsweise bei ihrer weiteren Verarbeitung oder beim Transport, deformiert werden können. Die für die Realisierung eines Linearführungssystems zur Verfügung stehenden (nominell "geraden") Führungsschienen weichen daher meist zumindest über einen Teil ihrer Länge in einem gewissen Mass von einer vorgegebenen geraden Form ab: Die Führungsschienen können beispielsweise bereichsweise gebogen sein, wobei die jeweilige Führungsschiene entlang ihrer Längsachse in beliebigen Richtungen quer zur Längsachse von einer Geraden abweichen kann.

Um Linearführungssysteme für Anwendungen zu realisieren, die höchste Anforderungen an die Genauigkeit der Positionierung von bewegbaren Komponenten erfüllen müssen, wurden verschiedene Konzepte entwickelt, die darauf beruhen, dass Führungsschienen, die von einer geraden Form abweichen, nachträglich in einem gewissen Mass begradigt werden können. Im Rahmen dieser Konzepte wird ausgenutzt, dass die jeweilige Führungsschiene eines Linearführungssystems in der Regel an einem Grundkörper, beispielsweise an einem Fundament oder an einem Maschinenbett oder an einer anderen tragenden Struktur, befestigt werden muss. In der Regel wird eine Führungsschiene an mehreren, über ihre gesamte Länge verteilte Stellen beispielsweise mit Schrauben oder anderen Befestigungsmitteln befestigt. Folglich kann die Genauigkeit einer Führungsschiene nachträglich verbessert werden, indem die Führungsschiene während der Installation des Linearführungssystems und vor ihrer Befestigung zunächst deformiert wird, um die Führungsschiene zu begradigen, d.h. in eine Form zu bringen, die in einem (gewünschten) geringeren Mass von der jeweils vorgegebenen geraden Form abweicht. Anschliessend wird die jeweilige Führungsschiene derart befestigt, dass sie - im befestigten Zustand - möglichst dauerhaft die gewünschte begradigte Form beibehält.

Um eine Befestigung von Führungsschienen in der jeweils gewünschten begradigten Form zu ermöglichen, wurden bisher verschiedene Befestigungsstrukturen und verschiedene Verfahren zur Befestigung von Führungsschienen vorgeschlagen.

In einem bekannten Verfahren zur Befestigung einer Führungsschiene wird die jeweilige Führungsschiene auf eine ebene Auflagefläche derart aufgebracht, dass die Grundfläche der Führungsschiene über die gesamte Länge der Führungsschiene in Kontakt mit der Auflagefläche steht, und anschliessend an verschiedenen, über die gesamte Länge der Führungsschiene verteilten Stellen mit geeigneten Befestigungsmitteln (beispielsweise Schrauben) befestigt. Die ebene Auflagefläche wird in der Regel an einem Grundkörper, beispielsweise an einem Fundament oder an einem Maschinenbett oder an einer anderen tragenden Struktur, mittels einer Bearbeitung ausgebildet, beispielsweise durch Fräsen, Schleifen oder Abformen einer Oberfläche des Grundkörpers. Durch die Befestigung an der ebenen Auflagefläche wird erreicht, dass die Form der Führungsschiene während der Befestigung über ihre gesamte Länge der Führungsschiene an die Form der Auflagefläche angepasst wird, sodass sichergestellt ist, dass die Führungsschiene aufgrund der Anpassung an die Auflagefläche zumindest in einer ersten Dimension (d.h. senkrecht zur Auflagefläche) begradigt ist. Um die Führungsschiene auch in einer zweiten Dimension, d.h. bezüglich einer zur Auflagefläche senkrechten Ebene, begradigen zu können, kann die Form der Führungsschiene nach dem Aufbringen auf die Auflagefläche, aber vor dem Befestigen an der Auflagefläche, zunächst vermessen werden, um festzustellen, in welchem Masse die Führungsschiene in der genannten zweiten Dimension von einer geraden Form abweicht. Zu diesem Zweck kann beispielsweise die räumliche Lage einer Seitenfläche der Führungsschiene über die gesamte Länge der Führungsschiene vermessen werden, beispielsweise mittels einer Messuhr. Anschliessend kann die Führungsschiene abschnittsweise gegebenenfalls parallel zur Auflagefläche derart ausgerichtet werden, dass die Führungsschiene auch in der zweiten Dimension innerhalb vorgegebener Toleranzen eine "gerade" Form annimmt. Anschliessend kann die Führungsschiene - nun im begradigten Zustand - mit den jeweiligen Befestigungsmitteln an der Auflagefläche fixiert und in einer stabilen Lagen gehalten werden.

Dieses Verfahren zum Befestigen der Führungsschiene ist offenbar extrem aufwändig, insbesondere hinsichtlich der Ausrichtung der Führungsschiene in der zweiten Dimension (parallel zur Auflagefläche), zumal das Vermessen der räumlichen Lage der Führungsschiene und das Ausrichten von einzelnen Längsabschnitten der Führungsschiene die Durchführung einer Vielzahl von Arbeitsschritten erfordert, welche unter Umständen zudem noch mehrfach wiederholt werden müssen, um die Einhaltung der vorgegebenen Toleranzen sicherzustellen. Weiterhin ist die Ausbildung der Auflagefläche in der Regel aufwändig und somit teuer, zumal der jeweilige Grundkörper grossflächig bearbeitet werden muss. Ein weiterer Nachteil dieses Verfahrens ist darin zu sehen, dass eine Vielzahl der Schritte dieses Verfahrens wiederholt werden müssen, falls die Führungsschiene zunächst von der Auflagefläche entfernt und anschliessend wieder an derselben Stelle befestigt oder gegebenenfalls durch eine andere Führungsschiene ersetzt werden soll.

Bei einem anderen bekannten Verfahren zur Befestigung einer Führungsschiene wird die jeweilige Führungsschiene ebenfalls auf eine ebene Auflagefläche aufgebracht. Eine Befestigung der Führungsschiene an der Auflagefläche ermöglicht somit eine Begradigung der Führungsschiene in einer ersten Dimension, d.h. senkrecht zur Auflagefläche. Um eine Ausrichtung der Führungsschiene parallel zur Auflagefläche und somit eine Begradigung der Führungsschiene bezüglich einer senkrecht zur Auflagefläche angeordneten Ebene, d.h. in einer zweiten Dimension, zu erleichtern, wird in diesem Verfahren eine gerade, bezüglich der Auflagefläche ortsfest angeordnete Anschlagskante geschaffen, mit der eine Seite der Führungsschiene in Kontakt gebracht werden kann.

Im vorliegenden Fall wird die Führungsschiene zunächst auf die Auflagefläche gelegt, wobei eine Seitenfläche der Führungsschiene mit der Anschlagskante in Kontakt gebracht wird. Anschliessend wird die Führungsschiene zunächst an mehreren über die gesamte Länge der Führungsschiene verteilten Stellen gegen die Anschlagskante derart gepresst, dass die Führungsschiene in der zweiten Dimension über die gesamte Länge der Führungsschiene innerhalb vorgegebener Toleranzen parallel zur Anschlagskante ausgerichtet ist. Zu diesem Zweck werden neben der Führungsschiene eine Vielzahl von verstellbaren mechanischen Komponenten angeordnet und einzeln befestigt, mit welchen Komponenten auf die der Anschlagskante gegenüberliegenden Seite der Führungsschiene definierte, auf die Anschlagkante gerichtete Kräfte übertragen werden können (durch geeignetes Verstellen dieser Komponenten). Als für diesen Zweck geeignete verstellbare Komponenten werden beispielsweise mittels Schrauben verstellbare und befestigbare Klemmleisten oder Keile oder exzentrische Schrauben angesehen. Nach diesem Ausrichten der Führungsschiene in der zweiten Dimension (parallel zur Auflagefläche) wird die Führungsschiene mittels Befestigungselementen, beispielsweise Schrauben, an verschiedenen, über die gesamte Länge der Führungsschiene verteilten Stellen an der Auflagefläche befestigt und dabei gegebenenfalls in der ersten Dimension (senkrecht zur Auflagefläche) begradigt (vergl*.* hierzu auch US 4628 756 und US 2006/0029 309 A1).

Auch dieses Verfahren hat verschiedene Nachteile. Zum einen ist die Bereitstellung der Anschlagskante und der Auflagefläche in der Regel aufwändig, weil zu diesem Zweck meist ein Grundkörper grossflächig (d.h. zumindest in einer Dimension über Strecken, deren Länge der Längserstreckung der Führungsschiene entspricht) bearbeitet werden muss. Weiterhin ist das Ausrichten der Führungsschiene, insbesondere das Ausrichten bezüglich der Anschlagskante, aufwändig, da eine Vielzahl von mechanischen Komponenten einzelnen montiert und einzeln verstellt werden müssen, um die Begradigung der Führungsschiene im Rahmen der vorgegebenen Toleranzen zu erzielen. Weiterhin müssen ebenfalls eine Vielzahl der Schritte dieses Verfahrens wiederholt werden, falls die Führungsschiene zunächst von der Auflagefläche entfernt und anschliessend wieder an derselben Stelle befestigt oder gegebenenfalls durch eine andere Führungsschiene ersetzt werden soll. In diesem Falle müssten die verstellbaren Komponenten, die benötigt werden, um die Führungsschiene gegen die Anschlagskante zu pressen, erneut justiert werden. Dies ist aufwändig.

Der vorliegenden Erfindung liegt die Aufgabe zugrunde, die genannten Nachteile zu vermeiden und eine Befestigungsstruktur zur Befestigung einer Führungsschiene eines Linearführungssystems zu schaffen, welche die Ausrichtung bzw. Begradigung der jeweiligen Führungsschiene bei der Montage der Führungsschiene vereinfacht. Weiterhin soll ein entsprechendes Verfahren geschaffen werden.

Diese Aufgabe wird gelöst durch eine Befestigungsstruktur zum Befestigen einer Führungsschiene eines Linearführungssystems mit den Merkmalen des Patentanspruchs 1 und ein Verfahren mit den Merkmalen des Patentanspruchs 15.

Die Befestigungsstruktur zum Befestigen einer Führungsschiene eines Linearführungssystems an einer vorgegebenen Position in einer vorgegebenen geraden Form dient der Befestigung von Führungsschienen, welche eine Grundfläche und eine erste und eine zweite Seitenfläche aufweisen, wobei die Seitenflächen an einander gegenüberliegenden Seiten der Führungsschiene ausgebildet sind. Die Befestigungsstruktur umfasst eine ebene Auflagefläche für die Führungsschiene und Befestigungsmittel zum Befestigen der Führungsschiene an der Auflagefläche, wobei die Führungsschiene vor dem Befestigen oder beim Befestigen derart auf die Auflagefläche aufbringbar ist, dass die Grundfläche der Führungsschiene in Kontakt mit der Auflagefläche ist.

Gemäss der Erfindung umfasst die Befestigungsstruktur einander gegenüberliegend angeordnete erste und zweite Führungsmittel zum Führen der Führungsschiene längs eines vorgegebenen Weges beim Aufbringen der Führungsschiene auf die Auflagefläche, wobei die ersten Führungsmittel eine erste Führungsfläche aufweisen, welche dazu dient, die Führungsschiene beim Aufbringen auf die Auflagefläche an der ersten Seitenfläche zu führen, und wobei die zweiten Führungsmittel eine zweite Führungsfläche aufweisen, welche dazu dient, die Führungsschiene beim Aufbringen auf die Auflagefläche an der zweiten Seitenfläche zu führen. Die Führungsmittel sind derart ausgebildet, dass sie beim Aufbringen der Führungsschiene auf die Auflagefläche jeweils Zwangskräfte parallel zur Auflagefläche auf die erste und die zweite Seitenfläche der Führungsschiene ausüben, welche Zwangskräfte eine Ausrichtung der Führungsschiene derart erzwingen, dass die Führungsschiene beim Aufbringen auf die Auflagefläche die vorgegebene Position einnimmt und die vorgegebene gerade Form annimmt.

Wesentlich ist, dass die Befestigungsstruktur zwei Führungsmittel umfasst, die bereits in der Umgebung der Auflagefläche bereitgestellt sind, bevor die Führungsschiene auf die Auflagefläche aufgebracht wird. Die ersten und die zweiten Führungsmittel sind derart angeordnet, dass die Führungsschiene - wenn sie bei einer Installation zur Auflagefläche bewegt wird, beispielsweise auf einem Weg, der senkrecht zur Auflagefläche gerichtet ist - auf dem Weg zur Auflagefläche mit den beiden Führungsmitteln in Kontakt gebracht werden muss, sodass die Führungsschiene zwangsweise an ihren Seitenflächen durch die beiden Führungsmittel geführt wird. Die beiden Führungsmittel sorgen dafür, dass die Führungsschiene auf ihrem Weg zur Auflagefläche zumindest parallel zu Auflagefläche zwangsweise eine Form annimmt, die durch die Führungsmittel vorgegeben ist. Auf diese Weise wird die Führungsschiene parallel zur Auflagefläche bereits begradigt, wenn sie auf die Auflagefläche aufgebracht wird. Anschliessend muss die Führungsschiene nur noch mit den Befestigungsmitteln an der Auflagefläche befestigt werden. Auf diese Weise ist dafür gesorgt, dass die Führungsschiene allein durch das Aufbringen auf die Auflagefläche und die anschliessende Befestigung an der Auflagefläche in zwei Dimensionen - d.h. senkrecht zur Auflagefläche und parallel zur Auflagefläche - ihre gerade Form und ihre Position innerhalb vorgegebener Toleranzen einnehmen kann und dabei gegebenenfalls zwangsweise begradigt wird. Die Montage der Führungsschiene ist offenbar mit wenig Aufwand verbunden, da zum Zwecke der Begradigung der Führungsschiene keine Komponenten vorhanden sind, die zum Zwecke einer Begradigung der Führungsschiene verstellt bzw. justiert werden müssen. Weiterhin können die Führungsmittel derart realisiert werden, dass die Führungsschiene einfach entfernt und gegebenenfalls durch eine andere Führungsschiene ersetzt werden kann, ohne die Führungsmittel verändern zu müssen. In diesem Fall müssen lediglich die Befestigungsmittel entfernt werden. Anschliessend kann die Führungsschiene von der Auflagefläche wegbewegt werden, wobei die Führungsschiene wiederum an ihren Seitenflächen mittels der ersten und zweiten Führungsmittel geführt ist. Anschliessend können die genannten Vorgänge wiederholt werden, um wieder eine Führungsschiene auf die Auflagefläche (jeweils an den beiden Führungsmitteln geführt) aufzubringen und an der Auflagefläche zu befestigen. Das Befestigen und das Entfernen der jeweiligen Führungsschienen sind dabei reversible Vorgänge, die beliebig oft wiederholt werden können, ohne die Führungsflächen verändern zu müssen. Dabei ist lediglich vorausgesetzt, dass die jeweiligen Führungsschienen ein Querschnittsprofil aufweisen, welches eine Führung der jeweiligen Führungsschiene an deren Seitenflächen mithilfe der ersten und zweiten Führungsmittel ermöglicht.

Erfindungsgemässe Befestigungsstrukturen mit geeigneten Führungsmitteln können auf verschiedene Weisen realisiert werden.

Eine Ausführungsform der Befestigungsstruktur ist dadurch charakterisiert, dass die erste Führungsfläche elastisch angeordnet oder elastisch deformierbar ist und bei einem mechanischen Kontakt mit der ersten Seitenfläche der Führungsschiene aus einer vorbestimmten Ruhelage auslenkbar ist, wobei bei der Auslenkung der ersten Führungsfläche Rückstellkräfte erzeugt werden, welche der jeweiligen Auslenkung der ersten Führungsfläche entgegenwirken und die Ausrichtung der Führungsschiene erzwingen. Diese Ausführungsform vereinfacht eine manuelle Installation der Führungsschiene. Dadurch, dass die erste Führungsfläche bei einem Kontakt mit der Führungsschiene aus der jeweiligen Ruhelage ausgelenkt werden kann, kann eine die Installation ausführende Person die jeweils zu befestigende Führungsschiene beim Aufbringen auf die Auflagefläche innerhalb relativ grosser Toleranzen hinsichtlich der räumlichen Anordnung relativ zu den jeweiligen Führungsflächen bewegen. Eine ungenaue Positionierung der Führungsschiene beim Aufbringen auf die Auflagefläche, insbesondere eine seitliche Auslenkung der Führungsschiene parallel zur Auflagefläche in Richtung auf die erste Führungsfläche, führt in diesem Fall zu Rückstellkräften, welche relativ klein sein können (je nach Elastizität der ersten Führungsfläche) und deshalb manuell mit hinreichender Genauigkeit und mit vertretbarem Kraftaufwand kontrollierbar sind. Weiterhin erfolgt die Positionierung und gegebenenfalls die Begradigung der Führungsschiene parallel zur Auflagefläche automatisch, zumal die Führungsschiene durch die Rückstellkräfte parallel zur Auflagefläche in eine vorbestimmte Position und eine vorbestimmte Form gebracht wird.

Eine Weiterentwicklung dieser Ausführungsform ist derart ausgebildet, dass die zweite Führungsfläche eine grössere Steifigkeit als die erste Führungsfläche aufweist und einen mechanischen Anschlag mit einer geraden Anschlagskante für die zweite Seitenfläche der Führungsschiene bildet, wobei die Führungsschiene gegen die Anschlagskante mittels der auf die erste Führungsfläche wirkenden Rückstellkräfte pressbar ist. In diesem Fall definiert die zweite Führungsfläche (wegen ihrer grösseren Steifigkeit) die Position und die Form, welche die jeweils zu befestigende Führungsschiene nach der Befestigung einnehmen soll. Die erste Führungsfläche hingegen stellt (bei einer entsprechenden Auslenkung aus der jeweiligen Ruhelage) die Kräfte bereit, die eine Ausrichtung der Führungsschiene parallel zur Auflagefläche beim Aufbringen auf die Auflagefläche bewirken.

In einer anderen Weiterentwicklung der oben genannten Ausführungsform der Befestigungsstruktur ist nicht nur die erste Führungsfläche elastisch angeordnet oder elastisch deformierbar, sondern zusätzlich die zweite Führungsfläche elastisch angeordnet oder elastisch deformierbar und bei einem mechanischen Kontakt mit der zweiten Seitenfläche der Führungsschiene aus einer vorbestimmten Ruhelage auslenkbar, wobei bei der Auslenkung der zweiten Führungsfläche Rückstellkräfte erzeugt werden, welche der jeweiligen Auslenkung der zweiten Führungsfläche entgegenwirken, und wobei die erste und die zweite Führungsfläche dieselbe Elastizität aufweisen und derart angeordnet sind, dass die beiden Führungsflächen bei einem Kontakt mit der jeweilige Führungsschiene in entgegengesetzte Richtungen auslenkbar sind. Diese Ausführungsform hat den Vorteil, dass die Führungsschiene beim Aufbringen auf die Auflagefläche durch die Einwirkung der Rückstellkräfte der Führungsflächen zwischen den Führungsflächen in einer vorgegebenen mittleren Position zentriert wird. In diesem Fall nimmt die Führungsschiene automatisch eine Gleichgewichtslage zwischen der ersten und der zweiten Führungsfläche ein. Die Führungsscheine wird dabei automatisch parallel zur Auflagefläche positioniert und gegebenenfalls begradigt. In einer anderen Variante dieser Ausführungsform wird derselbe Effekt, d.h. eine Zentrierung der Führungsschiene in einer vorgegebenen mittleren Position zwischen den Führungsflächen, dadurch erreicht, dass die erste Führungsfläche und die zweite Führungsfläche dieselbe Steifigkeit aufweisen.

Im Falle einer weiteren Ausführungsform der Befestigungsstruktur sind die Auflagefläche, die erste Führungsfläche und die zweite Führungsfläche in einem massiven Körper aus Metall mittels Formen oder Bearbeiten des Körpers ausgebildet. Diese Variante kann beispielsweise in Form eines massiven Körpers realisiert werden, welcher eine Nut aufweist, die zur Aufnahme der Führungsschiene dient und deren Seitenflanken die jeweiligen Führungsflächen für die Seitenflächen der jeweiligen Führungsschiene bilden. Ein derartig geformter Körper kann beispielsweise in einem Stück mittels Strangpressen geformt werden, beispielsweise mittels Strangpressen eines Profils aus Aluminium. Alternativ kann ein derartiger Körper hergestellt werden, indem eine geeignet geformte Nut durch Bearbeiten eines massiven Körpers realisiert wird, beispielsweise mittels Fräsen.

Ein massiver Körper gemäss dieser Ausführungsform kann in eine Tragstruktur, die durch Giessen eines aushärtbaren Materials (Giessmasse) hergestellt ist, eingebettet sein. Das Einbetten in einer derartigen Tragstruktur bietet vorteilhafterweise die Möglichkeit, die Befestigungsstruktur der Führungsschiene mit anderen Strukturelementen zu kombinieren, beispielsweise mit einem Maschinenbett einer Maschine. Der massive Körper kann in diesem Fall unabhängig von der Tragstruktur hergestellt werden. Die Herstellung der Tragstruktur mittels eines Giessverfahrens bietet den Vorteil, dass die Tragstruktur in einer Vielfalt von Formen, angepasst an die jeweiligen Bedürfnisse, realisiert werden kann. Weiterhin kann die jeweilige Anordnung des massiven Körpers relativ zur Tragstruktur nahezu beliebig gewählt werden, wenn der massive Körper beispielsweise in der zur Herstellung der Tragstruktur verwendeten Giessmasse angeordnet wird und die Giessmasse anschliessend zum Erstarren gebracht wird. Besonders vorteilhaft ist eine Einbettung des massiven Körpers in eine Tragstruktur aus Mineralguss. Mineralguss, d.h. eine Mischung aus einem Bindemittel auf Kunststoffbasis (z.B. ein Polymer wie Epoxidharz) und einem Füllstoff in Form einer Mischung aus Steinen und/oder gebrochenem Gestein und/oder Sand und/oder Kies, bildet die Grundlage zur Formung von Tragstrukturen, die einerseits eine beliebige Form annehmen können und andererseits eine grosse Festigkeit und Stabilität aufweisen, sodass derartige Tragstrukturen aus Mineralguss eine hohe Belastbarkeit und eine grosse Stabilität gewährleisten können.

Im Falle einer weiteren Ausführungsform der Befestigungsstruktur ist ein zumindest bereichsweise gebogenes Blechteil in eine Tragstruktur eingebettet, wobei das Blechteil die Auflagefläche, die erste Führungsfläche und die zweite Führungsfläche für die jeweilige Führungsschiene umfasst. Diese Variante hat den Vorteil, dass alle Teile der Befestigungsstruktur, welche für die Führung und Ausrichtung bzw. Begradigung der jeweiligen Führungsschiene beim Aufbringen der Führungsschiene auf die Auflagefläche verantwortlich sind (Auflagefläche, erste und zweite Führungsfläche), kostengünstig hergestellt werden können, beispielsweise durch Verformen (z.B. Biegen) eines einzigen Stück Blechs. Das zur Herstellung des Blechteils verwendete Blech kann dabei relativ dünn sein, zumal das Blechteil durch die Tragstruktur stabilisiert werden kann. Die Tragstruktur kann beispielsweise als Mineralguss-Körper ausgebildet sein.

Im Falle einer weiteren Ausführungsform der Befestigungsstruktur sind mehrere zumindest bereichsweise gebogene Blechteile derart in eine Tragstruktur eingebettet, dass die Blechteile in Richtung einer Geraden jeweils aneinandergereiht angeordnet sind und jedes der Blechteile jeweils einen Abschnitt der Auflagefläche, einen Abschnitt der ersten Führungsfläche und/oder einen Abschnitt der zweiten Führungsfläche bilden. In diesem Fall kann die Befestigungsstruktur für eine Führungsschiene beispielsweise aus mehreren Blechteilen zusammengesetzt werden, welche in Längsrichtung der jeweiligen Führungsschiene aneinandergereiht sind und sich in ihrer Gesamtheit über die gesamte Länge der Führungsschiene erstrecken. Diese Variante ist besonders kostengünstig realisierbar. Die Gesamtheit der jeweiligen Blechteile kann nämlich in der Regel kostengünstiger produziert werden als eine Befestigungsstruktur, deren Auflagefläche und deren erste und zweite Führungsmittel in Form eines einstückigen Bauteiles, dessen Längserstreckung ungefähr gleich der Längserstreckung der Führungsschiene ist, realisiert sind. Weiterhin ist es möglich, eine Vielzahl der genannten Blechteile auf einfache Weise (und somit kostengünstig) mit hoher Präzision relativ zueinander anzuordnen und in die Tragstruktur einzubetten. Letzteres kann beispielsweise realisiert werden, indem die Blechteile zunächst an einer Lehre längs einer Geraden jeweils aneinandergereiht befestigt werden, und zwar in einer Anordnung (relativ zueinander), welche innerhalb vorgegebener Toleranzen der gewünschten Anordnung entspricht, welche die Blechteile nach Einbetten in der Tragstruktur einnehmen sollen. Anschliessend können die Blechteile, jeweils gehalten von der Lehre, gemeinsam zumindest teilweise mit einer Giessmasse umgossen werden, welche nach dem Erstarren die jeweilige Tragstruktur bildet. Wie in den vorstehend genannten Beispielen kann auch in diesem Fall die Tragstruktur beispielsweise als Mineralguss-Körper ausgebildet sein.

Die vorstehend genannten Befestigungsstrukturen, die auf dem Einbetten eines massiven Körpers oder eines oder mehrerer Blechteile in eine Tragstruktur beruhen, habe den weiteren Vorteil, dass die jeweilige Befestigungsstruktur mit anderen Strukturen, beispielsweise mit einem Maschinenbett oder mit anderen Maschinenteilen, auf einfache Weise kombiniert werden kann. Die jeweils einzubettenden Körper bzw. Blechteile können beispielsweise an einer Lehre befestigt werden und zusammen mit der Lehre relativ zu einem Grundkörper präzise positioniert werden und anschliessend gemeinsam an dem Grundkörper fixiert werden. Der Grundkörper kann zu diesem Zweck beispielsweise einen mit einer aushärtbaren Giessmasse ausfüllbaren Raumbereich umfassen. Um die Befestigungsstruktur zu realisieren, können die jeweils einzubettenden Körper bzw. Blechteile in diesem Raumbereich relativ zum Grundkörper positioniert werden und anschliessend durch Umgiessen mit der Giessmasse an dem Grundkörper fixiert werden. Die Giessmasse kann beispielsweise eine Mischung von Materialien zur Herstellung eines Mineralguss-Körpers sein. Die jeweils ausgehärtete Giessmasse bildet im vorliegenden Fall eine Tragstruktur im Sinne der vorstehend genannten Ausführungsformen. Der Grundkörper kann ebenfalls als Gusskörper ausgebildet sein und beispielsweise aus Mineralguss oder Metallguss (beispielsweise Stahlguss oder Gusseisen) gefertigt sein.

Das erfindungsgemässe Verfahren zum Befestigen einer Führungsschiene eines Linearführungssystems an einer vorgegebenen Position in einer vorgegebenen geraden Form ist anwendbar auf eine Führungsschiene, welche eine Grundfläche und eine erste und eine zweite Seitenfläche aufweist, wobei die Seitenflächen an einander gegenüberliegenden Seiten der Führungsschiene ausgebildet sind, und umfasst die folgenden Schritte:
(i) Bereitstellen einer Befestigungsstruktur für die Führungsschiene, welche Befestigungsstruktur eine ebene Auflagefläche für die Führungsschiene und Befestigungsmittel zum Befestigen der Führungsschiene an der Auflagefläche umfasst,
(ii) Aufbringen der Führungsschiene auf die Auflagefläche längs eines vorgegebenen Weges derart, dass die Grundfläche der Führungsschiene in Kontakt mit der Auflagefläche gebracht wird,
(iii) Befestigen der Führungsschiene mittels der Befestigungsmittel.

Der Schritt "Bereitstellen der Befestigungsstruktur" umfasst dabei, dass einander gegenüberliegend angeordnete erste und zweite Führungsmittel bereitgestellt werden, welche die Führungsschiene beim Aufbringen der Führungsschiene auf die Auflagefläche zumindest längs eines Teils des vorgegebenen Weges führen, wobei die ersten Führungsmittel eine erste Führungsfläche aufweisen, welche die Führungsschiene beim Aufbringen auf die Auflagefläche an der ersten Seitenfläche führt, und die zweiten Führungsmittel eine zweite Führungsfläche aufweisen, welche die Führungsschiene beim Aufbringen auf die Auflagefläche an der zweiten Seitenfläche führt. Weiterhin sind die Führungsmittel derart ausgebildet, dass sie beim Aufbringen der Führungsschiene auf die Auflagefläche jeweils Zwangskräfte parallel zur Auflagefläche auf die erste und die zweite Seitenfläche der Führungsschiene ausüben, welche Zwangskräfte eine Ausrichtung der Führungsschiene derart erzwingen, dass die Führungsschiene beim Aufbringen auf die Auflagefläche die vorgegebene Position einnimmt und die vorgegebene gerade Form annimmt.

Aufgrund der jeweiligen Anordnung des ersten und des zweiten Führungsmittels ist demnach gemäss der Erfindung gewährleistet, dass die jeweilige Führungsschiene beim Aufbringen auf die Auflagefläche an den Seitenflächen geführt ist und durch die Wechselwirkung mit den Führungsmitteln positioniert und gegebenenfalls begradigt wird.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine perspektivische Ansicht einer ersten Ausführungsform der erfindungsgemässen Befestigungsstruktur für eine Führungsschiene, umfassend eine Mehrzahl von Blechteilen, welche in eine Tragstruktur eingebettet sind, mit einer an der Befestigungsstruktur befestigten Führungsschiene, wobei die Tragstruktur als Gusskörper ausgebildet und mit einem Grundkörper verbunden ist;
- Fig. 2: einen Querschnitt durch die Befestigungsstruktur, die Führungsschiene und den Grundkörper gemäss Fig. 1;
- Fig. 3: eine perspektivische Ansicht eines Blechteils gemäss Fig. 1 und 2;
- Fig. 4: eine perspektivische Ansicht eines Blechteils, welches als Alternative zu der Mehrzahl von Blechteilen in der Ausführungsform gemäss Fig. 1 verwendbar ist;
- Fig. 5: eine perspektivische Ansicht des Grundkörpers gemäss Fig. 1;
- Fig. 6: eine Lehre zur Ausrichtung und Befestigung der jeweiligen Blechteile gemäss Fig. 3 oder Fig. 4, als Hilfsmittel zur Herstellung einer erfindungsgemässen Befestigungsstruktur auf Basis der jeweiligen Blechteile;
- Fig. 7: die Lehre gemäss Fig. 6, mit einer linearen Anordnung von Blechteilen gemäss Fig. 1 bzw. Fig. 3;
- Fig. 8: die Anordnung gemäss Fig. 7, mit an den jeweiligen Blechteilen angeordneten Körpern zur Befestigung der Führungsschiene und zur Verankerung der jeweiligen
- Fig. 9: Führungsschiene in der Tragstruktur gemäss Fig. 1; ein Abdeckband zum Abdecken von Zwischenräumen zwischen den Blechteilen gemäss Fig. 7 oder 8;
- Fig. 10: die Anordnung gemäss Fig. 10, kombiniert mit einem Abdeckband gemäss Fig. 9;
- Fig. 11: die Anordnung gemäss Fig. 10 in Kombination mit dem Grundkörper gemäss Fig. 5, jeweils in einem Querschnitt, wobei die Lehre der Anordnung gemäss Fig. 10 derart relativ zum Grundkörper positioniert ist, dass die jeweiligen Körper und Blechteile durch Umgiessen mit einer Giessmasse am Grundkörper fixiert werden können, um die Befestigungsstruktur gemäss Fig. 1 zu bilden;
- Fig. 12: die Anordnung gemäss Fig. 11, wobei die Lehre entfernt ist, um die Befestigungsstruktur für eine Führungsschiene zugänglich zu machen;
- Fig. 13: die Anordnung gemäss Fig. 12, mit einer auf die Auflagefläche der Befestigungsstruktur aufgesetzten Führungsschiene;
- Fig. 14: einen Querschnitt durch eine zweite Ausführungsform der erfindungsgemässen Befestigungsstruktur, mit einer daran befestigten Führungsschiene;
- Fig. 15: einen Querschnitt durch eine dritte Ausführungsform der erfindungsgemässen Befestigungsstruktur, mit einer daran befestigten Führungsschiene;
- Fig. 16: einen Querschnitt durch eine vierte Ausführungsform der erfindungsgemässen Befestigungsstruktur, mit einer daran befestigten Führungsschiene;
- Fig. 17: einen Querschnitt durch eine fünfte Ausführungsform der erfindungsgemässen Befestigungsstruktur, mit einer daran befestigten Führungsschiene;
- Fig. 18: einen Querschnitt durch eine sechste Ausführungsform der erfindungsgemässen Befestigungsstruktur, mit einer daran befestigten Führungsschiene.

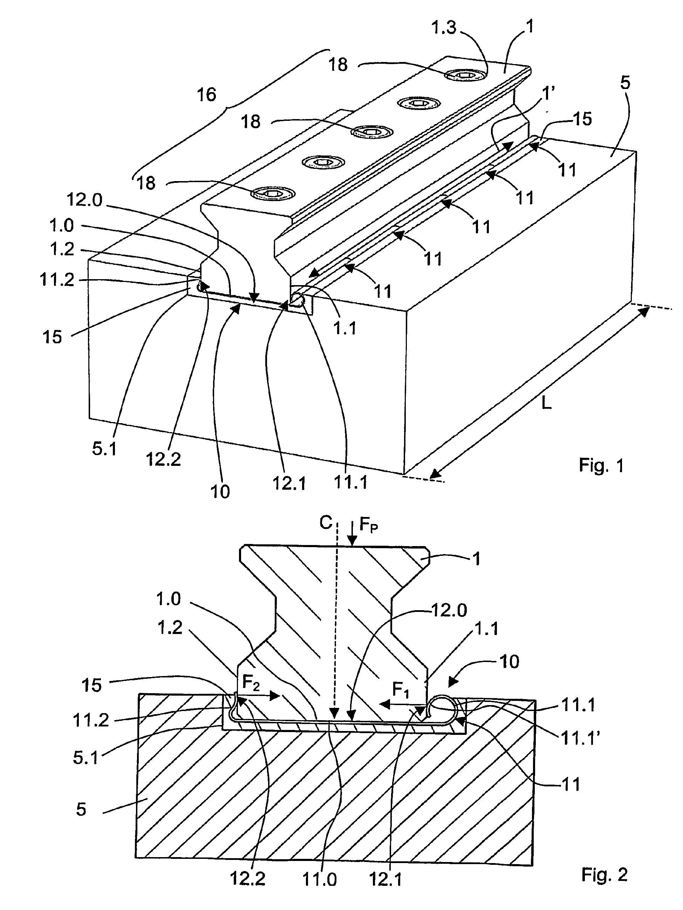

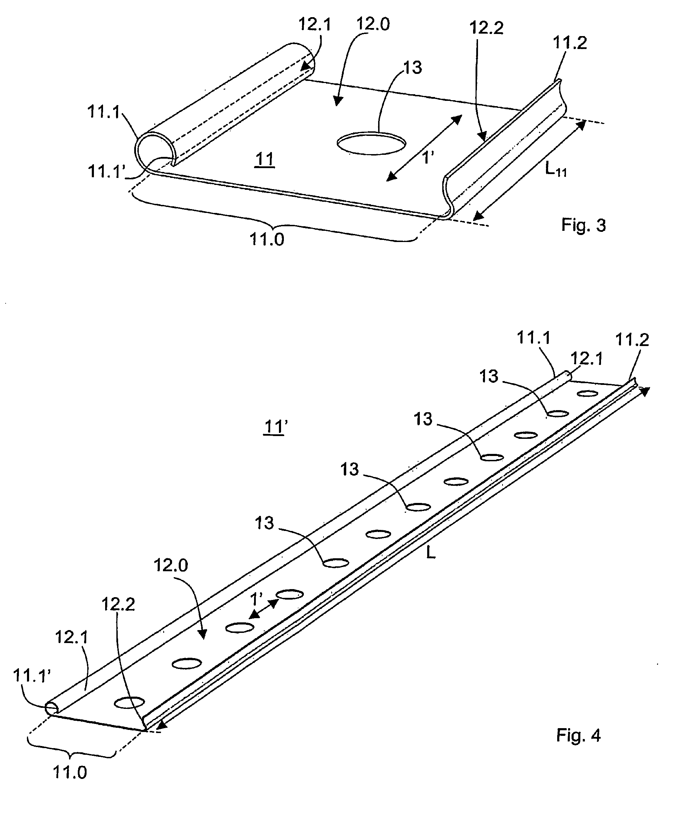

Fig. 1 und 2 zeigen einen Grundkörper 5 zusammen mit einer an dem Grundkörper 5 fixierten Befestigungsstruktur 10 gemäss der Erfindung und einer an der Befestigungsstruktur 10 befestigten Führungsschiene 1. Fig. 4-13 stellen Zwischenschritte eines Verfahrens zur Realisierung der in Fig. 1 und 2 dargestellten Befestigungsstruktur 10 und eines erfindungsgemässen Verfahrens zum Befestigen der Führungsschiene 1 an der Befestigungsstruktur 10 dar.

Die Führungsschiene 1 kann beispielsweise als Führungsschiene eines nicht weiter im Detail dargestellten Linearführungssystems gedacht sein und weist in Richtung ihrer Längserstreckung eine Länge L auf. Der (Doppel-) Pfeil 1' in Fig. 1 markiert eine Gerade, bezüglich welcher eine an der Befestigungsstruktur 10 zu befestigende Führungsschiene (im Rahmen bestimmter Toleranzen) hinsichtlich ihrer Längserstreckung parallel ausgerichtet werden soll, wobei die jeweilige Führungsschiene dabei an eine durch die Befestigungsstruktur 10 bestimmte Position gebracht und gegebenenfalls begradigt werden kann.

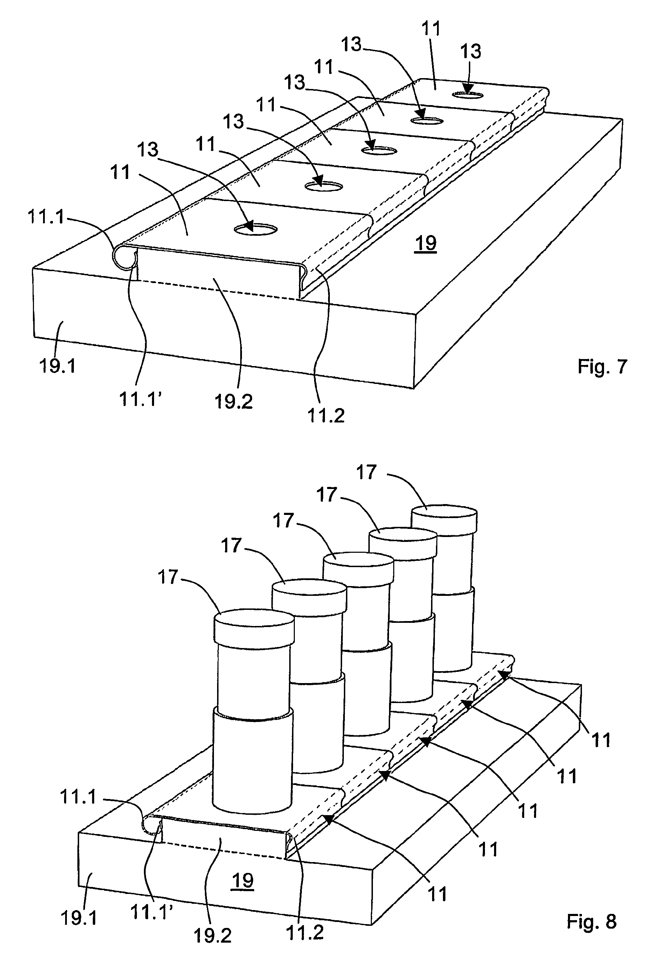

Wie Fig. 1 zu entnehmen ist, umfasst die Befestigungsstruktur 10 u.a. eine Mehrzahl von Blechteilen 11, welche in Richtung des Pfeils 1' aneinandergereiht sind, wobei die Gesamtheit aller Blechteile 11 sich im vorliegenden Beispiel in der Richtung des Pfeils 1' über eine Distanz erstreckt, welche identisch mit der Länge L der Führungsschiene 1 ist. Die Länge L der Führungsschiene 1 ist demnach ein Vielfaches der Erstreckung L₁₁ des Blechteils 11 in der Richtung des Pfeils 1' (Fig. 3). Die Befestigungsstruktur 10 umfasst weiterhin Befestigungsmittel 16 zum Befestigen der Führungsschiene. Die Befestigungsmittel 16 umfassen im vorliegenden Fall eine Mehrzahl von Schrauben 18, welche durch durchgehende Bohrungen 1.3 in der Führungsschiene 1 führbar sind (Fig. 1), und mehrere (in Fig. 1 nicht dargestellte) Körper 17, welche auf der von der Führungsschiene 1 abgewandten Seite der Blechteile 11 angeordnet sind und mehrere Gewindebohrungen aufweisen, in denen die Schrauben 18 fixiert werden können (die Körper 17 werden im Zusammenhang mit den Fig. 8, 10 und 11 noch näher erläutert). Natürlich können die Körper 17 und Schrauben 18 auch durch andere bekannte Befestigungsmittel ersetzt werden (z.B. Mittel zum Klemmen).

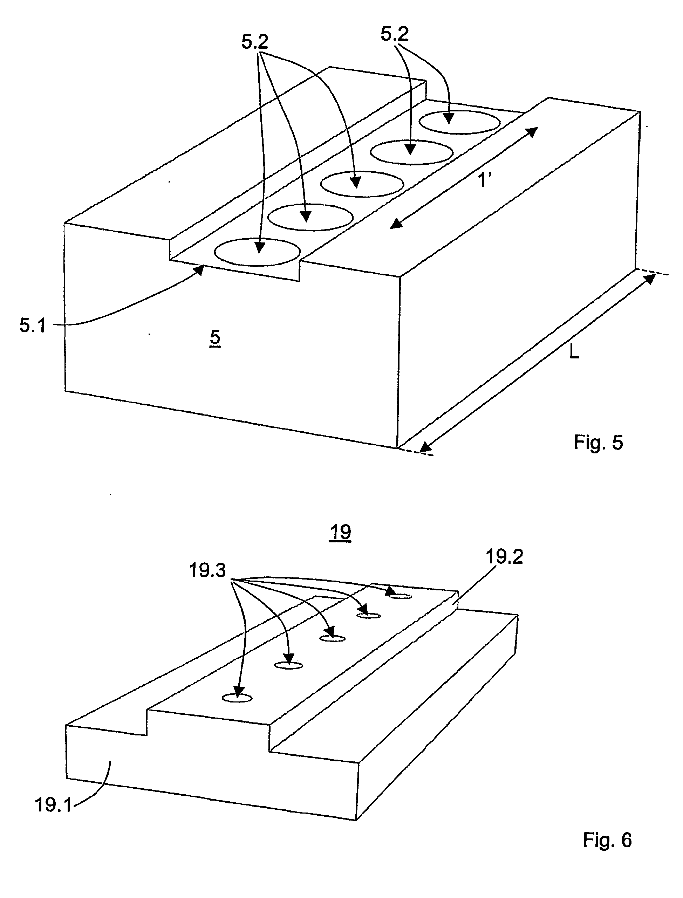

Die Identität zwischen der Erstreckung der Befestigungsstruktur 10 in Richtung des Pfeils 1' und der Länge L der Führungsschiene ist im Rahmen der Erfindung nicht zwingend: Die genannte Erstreckung der Befestigungsstruktur 10 könnte auch kürzer oder länger als L sein. Im Beispiel gemäss Fig. 5 weist die Befestigungsstruktur 10 fünf Blechteile 11 auf. Diese Anzahl ist im vorliegenden Fall ebenfalls willkürlich gewählt, wobei in einer konkreten Anwendung der vorliegenden Ausführungsführungsform die jeweilige Anzahl der Blechteile beispielsweise nach Kosten-Nutzen-Überlegungen optimiert werden kann: Die Stückkosten pro Blechteil 11 steigen in der Regel überproportional mit der Längserstreckung in Richtung des Pfeils 1' (bei gleichen Herstellungstoleranzen pro Längeneinheit); andererseits ist der Aufwand für die Herstellung der Befestigungsstruktur 10 umso grösser, je mehr Blechteile 11 pro Längeneinheit verwendet werden, zumal jedes einzelne Blechteil 11 während des Herstellungsprozesses präzise positioniert werden muss, um die gewünschten Toleranzen einzuhalten. Es ist zumindest zweckmässig, die Länge ("L₁₁" in Fig. 3) eines Bleichteils 11 derart zu wählen, dass sie gleich dem Abstand zweier benachbarter Bohrungen 1.3 in der Führungsschiene 1 oder einem ganzzahligen Vielfachen dieses Abstands ist.

Wie Fig. 1 und 2 andeuten, sind die Blechteile 11 in einer Tragstruktur 15 eingebettet, welche wiederum in einer sich (senkrecht zur Zeichenebene) geradlinig erstreckenden Nut 5.1 an einer Oberfläche des Grundkörpers 5 untergebracht ist. Die Tragstruktur 15 kann beispielsweise als Gusskörper ausgebildet sein, bevorzugt als Mineralgusskörper. Diese Variante hat den Vorteil, dass die Blechteile 11 lediglich in der Nut 5.1 relativ zum Grundkörper 5 positioniert werden müssen und die Nut 5.1 lediglich in einem Zwischenraum zwischen Wandflächen der Nut 5.1 und den Blechteilen 11 mit einer aushärtbaren Giessmasse (beispielsweise Mineralguss) gefüllt werden muss, um eine stabile, belastbare Verbindung zwischen den Blechteilen 11 und dem Grundkörper 5 herzustellen. Der Grundkörper 5 kann ebenfalls als Gusskörper (z.B. aus Metall oder Mineralguss) ausgebildet sein, wobei die Nut 5.1 in einem Giessprozess bei der Herstellung der Grundkörpers 5 geformt oder durch eine Bearbeitung des Grundkörpers 5 (im erstarrten Zustand) erzeugt werden kann.

Wie Fig. 1 und 2 weiter zeigen, weist die Führungsschiene 1 eine Grundfläche 1.0 und - an die Grundfläche 1.0 angrenzend - eine erste Seitenfläche 1.1 und eine zweite Seitenfläche 1.2 auf, wobei die Seitenflächen 1.1 und 1.2 an einander gegenüberliegenden Seiten der Führungsschiene 1 ausgebildet sind. Um eine Befestigung der Führungsschiene 1 mittels der Befestigungsstruktur 10 zu ermöglichen, müssen sowohl die Grundfläche 1.0, die erste Seitenfläche 1.1 und die zweite Seitenfläche 1.2 mit der Befestigungsstruktur 10 in Kontakt gebracht werden.

Wie Fig. 1-3 zeigen, umfasst jedes Blechteil 11 verschiedene Abschnitte, welche mit der Grundfläche 1.0 bzw. der ersten Seitenfläche 1.1 bzw. der zweiten Seitenfläche 1.2 der Führungsschiene 1 in Kontakt sind, wenn die Führungsschiene 1 an der Befestigungsstruktur 10 befestigt ist, und welche dementsprechend mit der Grundfläche 1.0 bzw. der ersten Seitenfläche 1.1 bzw. der zweiten Seitenfläche 1.2 der Führungsschiene 1 funktionell korrespondieren:
a) einen ebenen Abschnitt 11.0,
b) ein an den ebenen Abschnitt 11.0 angrenzendes, in Richtung des Pfeils 1' (d.h. in Längsrichtung der Führungsschiene 1) angeordnetes erstes Seitenteil 11.1, und
c) ein an den ebenen Abschnitt 11.0 angrenzendes, in Richtung des Pfeils 1' (d.h. in Längsrichtung der Führungsschiene 1) angeordnetes und dem ersten Seitenteil 11.1 gegenüberliegendes zweites Seitenteil 11.2.

Jedes Blechteil 11 ist im vorliegenden Fall der Einfachheit halber einstückig ausgebildet und beispielsweise durch Biegen eines geeignet vorgeformten Blechelements herstellbar, wobei die Seitenteile 11.1 und 11.2 - bezogen auf den ebenen Abschnitt 11.0 - zu derselben Seite hin abgebogen sind (in Fig. 1-3 nach oben).

Im Sinne der vorliegenden Erfindung bilden die ebenen Abschnitte 11.0 der Gesamtheit aller Blechteile 11 der Befestigungsstruktur 10 eine ebene Auflagefläche 12.0 für die Führungsschiene 1, wobei die Führungsschiene 1 vor dem Befestigen oder beim Befestigen derart auf die Auflagefläche 12 aufbringbar ist, dass die Grundfläche 1.0 der Führungsschiene 1 in Kontakt mit der Auflagefläche 12.0 ist. Wie Fig. 2 andeutet, kann die Führungsschiene beispielsweise längs eines durch den Pfeil C charakterisierten geradlinigen Weges senkrecht zu den ebenen Abschnitten 11.0 auf die Auflagefläche 12.0 aufgebracht werden. Natürlich ist es auch denkbar, die Führungsschiene 1 längs anderer Wege zur Auflagefläche 12.0 zu bringen, beispielsweise längs Wegen, die nicht geradlinig verlaufen, oder längs Wegen, die nicht exakt senkrecht zur Auflagefläche 12.0 gerichtet sind.

Im Sinne der vorliegenden Erfindung bilden die Seitenteile 11.1 der Gesamtheit aller Blechteile 11 der Befestigungsstruktur 10 erste Führungsmittel, welche die Führungsschiene 1 führen, wenn die Führungsschiene 1 längs eines vorgegebenen Weges (beispielsweise in Richtung des Pfeils C in Fig. 2) auf die Auflagefläche 12.0 aufgebracht wird. Zu diesem Zweck umfasst das Seitenteil 11.1 in einem dem Seitenteil 11.2 zugewandten Oberflächenbereich eine Führungsfläche 12.1, mit welcher die Seitenfläche 1.1 der Führungsschiene 1 beim Aufbringen auf die Auflagefläche 12.0 in Kontakt gebracht werden kann, um die Führungsschiene 1 auf dem Weg zur Auflagefläche 12.0 zu führen.

Entsprechend bilden im Sinne der vorliegenden Erfindung die Seitenteile 11.2 der Gesamtheit aller Blechteile 11 der Befestigungsstruktur 10 zweite Führungsmittel, welche die Führungsschiene 1 führen, wenn die Führungsschiene 1 längs eines vorgegebenen Weges (beispielsweise in Richtung des Pfeils C in Fig. 2) auf die Auflagefläche 12.0 aufgebracht wird. Zu diesem Zweck umfasst das Seitenteil 11.2 in einem dem Seitenteil 11.1 zugewandten Oberflächenbereich eine Führungsfläche 12.2, mit welcher die Seitenfläche 1.2 der Führungsschiene 1 beim Aufbringen auf die Auflagefläche 12.0 in Kontakt gebracht werden kann, um die Führungsschiene 1 auf dem Weg zur Auflagefläche 12.0 zu führen.

Wie Fig. 2 andeutet, ist der Abstand zwischen der Führungsfläche 12.1 und der Führungsfläche 12.2 so bemessen, dass die Führungsschiene 1 sowohl mit der Führungsfläche 12.1 als auch mit der Führungsfläche 12.2 in Kontakt gebracht werden muss, wenn die Führungsschiene 1 auf die Auflagefläche 12.0 (beispielsweise in Richtung des Pfeils C in Fig. 2) aufgebracht wird. Die Führungsschiene 1 wird dabei folglich an beiden Seitenflächen 1.1 und 1.2 geführt. Dies hat zur Folge, dass das Seitenteil 11.1 (erste Führungsmittel) und das Seitenteil 11.2 (zweite Führungsmittel) beim Aufbringen der Führungsschiene auf die Auflagefläche jeweils Zwangskräfte F₁ bzw. F₂ auf die Seitenflächen 1.1 bzw. 1.2 ausüben, wie in Fig. 2 durch einen mit F₁ gekennzeichneten Pfeil an der Seitenfläche 1.1 und einen mit F₂ gekennzeichneten Pfeil an der Seitenfläche 1.1 angedeutet ist. Wie in Fig. 2 angedeutet ist, sind die Zwangskräfte F₁ und F₂ parallel zur Auflagefläche 12.0 und relativ zueinander entgegengesetzt gerichtet. Folglich nimmt die Führungsschiene 1 unter dem Einfluss der Zwangskräfte F₁ und F₂ nach dem Aufbringen auf die Auflagefläche 12.0 eine stabile Gleichgewichtslage zwischen dem Seitenteil 11.1 und dem Seitenteil 11.2 ein. Die Gleichgewichtslage wird durch die jeweilige Anordnung der Führungsflächen 12.1 und 12.2 bestimmt, sodass gewährleistet ist, dass die Führungsschiene 1 beim Aufbringen auf die Auflagefläche 12.0 eine vorgegebene (durch die Befestigungsstruktur 10 bestimmte) Position einnimmt. Da die Seitenteile 11.1 bzw. 11.2 der einzelnen Blechteile 11 weiterhin jeweils parallel zu einer (durch den Pfeil 1' definierten) Geraden angeordnet sind, ist weiterhin gewährleistet, dass die Führungsschiene 1 beim Aufbringen auf die Auflagefläche 12.0 eine gerade Form annimmt und demzufolge gegebenenfalls begradigt wird. Wie in Fig. 2 durch einen mit F_{P} bezeichneten Pfeil angedeutet ist, kann es notwendig sein, die Führungsschiene 1 mit einer Anpresskraft F_{P} in Richtung auf die Auflagefläche 12.0 zu belasten, um die Führungsschiene 1 an den Seitenteilen 11.1 und 11.2 entlang zur Auflagefläche 12.0 zu bringen. Die Grösse dieser Anpresskraft F_{P} kann beispielsweise davon abhängen, in welchem Masse die Führungsschiene beim Aufbringen auf die Auflagefläche 12.0 begradigt werden muss.

Das Verhalten der Befestigungsstruktur 10, insbesondere die jeweilige Grösse der Zwangskräfte F₁ und F₂ und die jeweilige Gleichgewichtslage der Führungsschiene 1, hängen wesentlich von der Konstruktion der Seitenteile 11.1 und. 11.2 und insbesondere von deren Elastizität ab. Die folgenden Eigenschaften der Seitenteile 11.1 und. 11.2 sind in diesem Zusammenhang von Bedeutung:
- Das zweite Seitenteil 11.2 ist auf der von dem ebenen Abschnitt 11.0 abgewandten Seite und insbesondere in dem Bereich, der mit der Führungsschiene 1 in Kontakt geraten kann, durch die Tragstruktur 15 abgestützt (die Blechteile 11 sind entsprechend in die Tragstruktur 15 eingebettet).
- Das erste Seitenteil 11.1 hat die Form einer Rolle, welche - ausgehend von dem ebenen Abschnitt 11.0 - um eine zum Pfeil 1' parallele Achse in Richtung auf das zweite Seitenteil 11.2 gebogen ist (Fig. 2 und 3). Ein Teilbereich des Seitenteils 11.1, welcher unmittelbar an den ebenen Abschnitt 11.0 angrenzt, ist auf der von dem ebenen Abschnitt 11.0 abgewandten Seite durch die Tragstruktur 15 abgestützt (die Blechteile 11 sind entsprechend in die Tragstruktur 15 eingebettet). Ein weiterer Teilbereich 11.1' des ersten Seitenteils 11.1 ist hingegen freitragend (d.h. nicht durch die Tragstruktur 15 abgestützt). Dieser Teilbereich umfasst insbesondere die erste Führungsfläche 12.1.
- Die Blechteile 11 sind bevorzugt aus einem elastisch federnden Material (z.B. Federstahl) gefertigt. Unter dieser Voraussetzung ist der Teilbereich 11.1' des ersten Seitenteils 11.1 quer zur Längsrichtung der Führungsschiene 1 elastisch biegsam, zumal der Teilbereich 11.1' nicht durch die Tragstruktur 15 gestützt ist. Das zweite Seitenteil 11.2 hingegen weist eine grössere Steifigkeit auf als der Teilbereich 11.1', zumal das zweite Seitenteil 11.2 durch die Tragstruktur 15 gestützt ist.
- Das erste Seitenteil 11.1 ist so dimensioniert, dass der Teilbereich 11.1' beim Aufbringen der Führungsschiene auf die Auflagefläche 12.0 elastisch deformiert wird und demzufolge eine Rückstellkraft (Zwangskraft F₁) erzeugt, welche in Richtung auf das zweite Seitenteil 11.2 wirkt. Das zweite Seitenteil 11.2 wirkt wegen seiner grösseren Steifigkeit im Vergleich mit dem Teilbereich 11.1' als mechanischer Anschlag für die Führungsschiene 1. Demzufolge wird die Führungsschiene 1 beim Aufbringen auf die Auflagefläche 12.0 von dem elastisch deformierten Teilbereich 11.1' gegen das zweite Seitenteil 11.2 gepresst und dabei gegebenenfalls begradigt (entsprechend der Form des zweiten Seitenteils 11.2).
- Das erste Seitenteil 11.1 und das zweite Seitenteil 11.2 sind in einer Ebene quer zur Längsrichtung der Führungsschiene 1 zum ebenen Abschnitt 11.0 hin konvex gekrümmt. Demzufolge sind die Führungsflächen 12.1 und 12.2 entsprechend quer zur Längsrichtung der Führungsschiene 1 zum ebenen Abschnitt 11.0 hin konvex gekrümmt (siehe Fig. 2). Dies bedeutet, dass der Abstand zwischen den Führungsflächen 12.1 und 12.2 längs des Weges C gemäss Fig. 2 geringer wird. Diese Massnahme erleichtert die Handhabung der Führungsschiene 1 beim Aufbringen auf die Auflagefläche 12.0, zumal sie die Toleranzen hinsichtlich der Genauigkeit erhöht, mit der die Führungsschiene 1 bewegt werden muss, um sie in Kontakt mit den Führungsflächen 12.1 und 12.2 zu bringen. Entsprechend erleichtert diese Massnahme die Handhabung einer Führungsschiene 1, falls diese parallel zur Auflagefläche 12.0 von einer geraden Form abweicht. Es sei darauf verwiesen, dass nicht unbedingt beide Führungsflächen 12.1 und 12.2 - wie im vorliegenden Beispiel - eine konvexe Krümmung aufweisen müssen, um die genannten Vorteile zu erzielen. Selbst wenn nur eine der Führungsflächen 12.1 oder 12.2 derart gekrümmt wäre oder zumindest bereichsweise zur Auflagefläche hin geneigt wäre, könnten die genannten Vorteile erzielt werden.

Wie Fig. 3 zeigt, weist jedes Blechteil 11 im Bereich des ebenen Abschnitts 11.0 ein Loch 13 auf. Jedes Loch 13 korrespondiert mit einer der Bohrungen 1.3 in der Führungsschiene 1 (Fig. 1), und bietet die Möglichkeit, Schrauben 18 oder andere Befestigungsmittel durch eines der Löcher 13 zu führen, um die Führungsschiene 1 an der Befestigungsstruktur 10 zu befestigen. Details dieser Befestigung werden im Folgenden im Zusammenhang mit den Fig. 5-13 erläutert.

Fig. 4 zeigt ein Blechteil 11', welches hinsichtlich seines Querschnittsprofils (in einer Ebene senkrecht zum Pfeil 1') mit dem Blechteil 11 gemäss Fig. 1-3 übereinstimmt (gleiche Bezugszeichen in den Fig. 3 und 4 geben gleiche bzw. gleichwirkende Teile an). Das Blechteil 11' hat allerdings eine Längserstreckung (in Richtung des Pfeils 1'), welche mit der Länge L der Führungsschiene 1 identisch oder länger als die Länge L ist. Die Führungsflächen 12.1 und 12.2 sind folglich geeignet, die Führungsschiene 1 auf der gesamten Länge zu führen. Das Blechteil 11' kann demnach als Ersatz für eine Mehrzahl von Blechteilen 11 in der Befestigungsstruktur 10 dienen.

Im Folgenden wird mit Bezug auf Fig. 5-13 eine Möglichkeit zur Realisierung der in Fig. 1 und 2 dargestellten Befestigungsstruktur 10 für die Führungsschiene 1 erläutert, wobei angenommen wird, dass die Tragstruktur 15 aus einem Gussmaterial (z.B. Mineralguss) besteht. Die Realisierung der Befestigungsstruktur erfolgt in mehreren Verfahrensschritten, wobei jede der Fig. 5-13 jeweils ein Ergebnis der jeweiligen Verfahrensschritte darstellt.

Fig. 5 zeigt den Grundkörper 5 gemäss Fig. 1, jedoch ohne die Befestigungsstruktur 10, die Tragstruktur 15 und die Führungsschiene 1. Wie ersichtlich, weist der Grundkörper 5 mehrere Löcher 5.2 auf, welche am Grund der Nut 5.1 angeordnet sind. Die Löcher 5.2 bieten Raum zur Unterbringung von Teilen der Befestigungsstruktur 10, insbesondere zur Unterbringung der bereits erwähnten Körper 17, an denen die Schrauben 18 gemäss Fig. 1 befestigbar sind. Dementsprechend entspricht der Abstand der jeweiligen Mitten benachbarter Löcher 5.2 in etwa dem Abstand der jeweiligen Mitten benachbarter Bohrungen 1.3 in der Führungsschiene 1.

Fig. 6 zeigt eine Lehre 19, welche als Hilfsmittel zur präzisen Positionierung von Blechteilen 11 bzw. 11' dient. Die Lehre 19 umfasst eine Basis 19.1 und mindestens einen an der Basis angeordneten, geraden Steg 19.2. Der Steg 19.2 dient zum Ausrichten von Blechteilen 11 bzw. 11' längs einer Geraden. Die Breite des Steges 19.2 ist so gewählt, dass der Steg 19.2 jeweils mit der Auflagefläche 12.0, der ersten Führungsfläche 12.1 und der zweiten Führungsfläche 12.2 des jeweiligen Blechteils 11 bzw. 11' in Kontakt bringbar ist. Die Blechteile 11 und 11' sind deshalb derart auf dem Steg 19.2 platzierbar, dass die Auflagefläche 12.0 und die Führungsflächen 12.1 und 12.2 des jeweiligen Blechteils 11 bzw. 11' den Steg 19.2 berühren, bevorzugt derart, dass der freitragende Teilbereich 11.1' des jeweiligen Blechteils 11 bzw. 11' elastisch vorgespannt ist. Letzteres garantiert einen stabilen Sitz des jeweiligen Blechteils 11 bzw. 11' auf dem Steg 19.2 und eine selbsttätige Ausrichtung des jeweiligen Blechteils 11 bzw. 11' parallel zur Längsrichtung des Stegs 19.2. Durchgehende Bohrungen 19.3 im Bereich des Stegs 19.2 ermöglichen es ferner, Gegenständen durch die jeweiligen Bohrungen 19.3 durchzuführen, beispielsweise Befestigungsmittel zur Befestigung der jeweiligen Blechteile 11 bzw. 11' oder anderer Gegenstände.

Um zu ermöglichen, dass - in Anwendung der vorliegenden Erfindung - in einem einzigen Arbeitsschritt gleich mehrere Befestigungsstrukturen 10 für mehrere nebeneinander anzuordnende Führungsschienen 1 geschaffen werden können, kann die Lehre 19 - abweichend von der Darstellung gemäss Fig. 7 - mit mehreren Stegen 19.2 ausgestattet werden, welche - abhängig von der Art der jeweiligen Anwendung - in verschiedenen Varianten an der Basis 19.1 angeordnet sein können. Die Lehre 19 könnte beispielsweise mit mehreren Stegen 19.2 ausgestattet werden, welche an einer Seite der Lehre 19 parallel zueinander ausgerichtet sind. Falls die Lehre 19 eine Mehrzahl von Stegen 19.2 aufweist, kann es zweckmässig sein, die Höhen der jeweiligen Stege 19.2 bezüglich der Basis 19.1 unterschiedlich zu wählen. Dadurch wird erreicht, dass mit derselben Lehre 19 in einem Arbeitsschritt Befestigungsstrukturen 10 für mehrere Führungsschienen 1 geschaffen werden können, welche in verschiedenen Höhen bezüglich einem Grundkörper angeordnet werden sollen. Es ist allerdings nicht zwingend, dass alle Stege 19.2 jeweils parallel zueinander und/oder in einer einzigen Ebene angeordnet sein müssen: Mehrere Stege 19.2 können im Prinzip in beliebeigen Winkelstellungen im dreidimensionalen Raum angeordnet sein.

Fig. 7 zeigt - als Ergebnis eines ersten Verfahrensschritts - ein Beispiel für eine lineare Anordnung von Blechteilen 11, welche - auf dem Steg 19.2 der Lehre 19 sitzend - längs einer Geraden aneinandergereiht sind, wobei jeweils - wie vorstehend beschrieben - die Auflagefläche 12.0 und die Führungsflächen 12.1 und 12.2 des jeweiligen Blechteils 11 mit der Oberfläche des Stegs 19.2 in Kontakt stehen. Bevorzugt berühren benachbarte Blechteile 11 einander. Letzteres ist allerdings nicht notwendig. Die Blechteile 11 sind relativ zu den Bohrungen 19.3 (Fig. 6) derart angeordnet, dass die Löcher 13 der Blechteile 11 jeweils mit den Bohrungen 19.3 zur Deckung gebracht sind (Fig. 7).

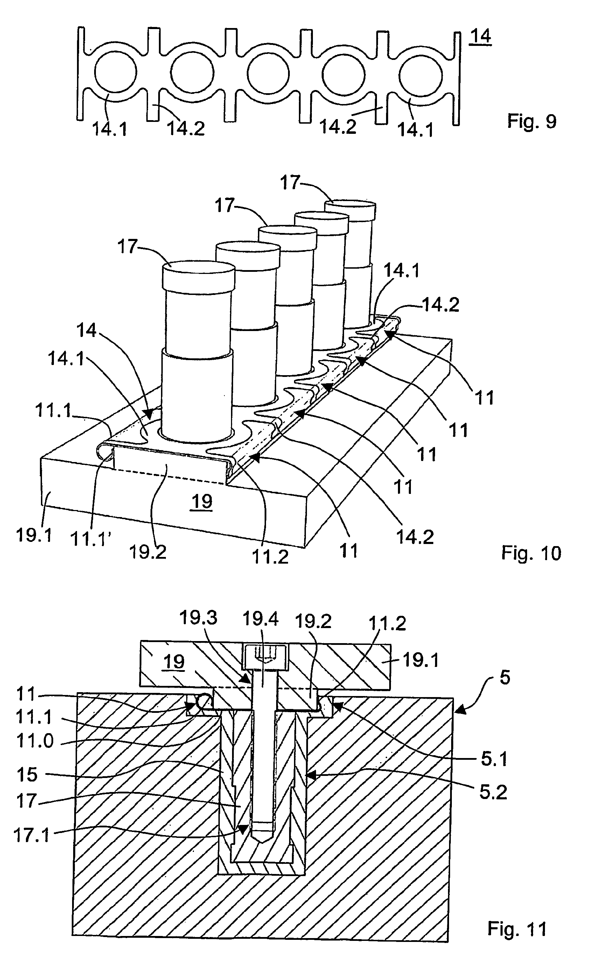

In einem zweiten Verfahrensschritt wird - ausgehend von der in Fig. 7 dargestellten linearen Anordnung von Blechteilen 11 - über jedem Loch 13 der Blechteile 11 (auf der von der Lehre 19 abgewandten Seite) jeweils ein Körper 17 angeordnet und an der Lehre 19 fixiert. Jeder Körper 17 weist - wie Fig. 11 entnehmbar ist und im Zusammenhang mit Fig. 11 noch erläutert wird - eine Gewindebohrung auf, über die der jeweilige Körper mit entsprechenden Befestigungsmitteln (d.h. mittels einer durch eine der Bohrungen 19.3 geführte Schraube) an der Lehre 19 befestigt werden kann. Im vorliegenden Fall hat jeder Körper 17 die Form eines Zylinders, wobei zu beachten ist, dass die Form des jeweiligen Körpers 17 in diesem Zusammenhang nicht relevant ist. Die Körper 17 sind derart ausgelegt, dass jeder Körper 17 über seine gesamte Länge in eines der Löcher 5.2 im Grundkörper 5 eintauchen können (Fig. 5). Dementsprechend ist es möglich, die in Fig. 8 dargestellte Anordnung von Blechteilen 11 und Körpern 17 mit Hilfe der Lehre 19 derart relativ zum Grundkörper 5 gemäss Fig. 5 anzuordnen, dass einerseits die Körper 17 in jeweils eines der Löcher 15.2 eintauchen und andererseits die Blechteile 11 - wie in Fig. 1 und 2 dargestellt - innerhalb der Nut 5.1 parallel zum Pfeil 1' ausgerichtet sind.

Fig. 9 zeigt ein Abdeckband 14, welches aus einer Folge von ringförmigen Abschnitten 14.1 und streifenförmigen Abschnitten 14.2 besteht, wobei zwischen je zwei streifenförmigen Abschnitten 14.2 jeweils einer der ringförmigen Abschnitte 14.1 angeordnet ist. Die Form des Abdeckbandes 14 ist - wie aus Fig. 10 hervorgeht - derart an die Form der Körper 17 und die Anordnung der Blechteile 11 gemäss Fig. 8 angepasst, dass die ringförmigen Abschnitte 14 jeweils über einen der Körper 17 geführt werden können, um zu ermöglichen, dass das Abdeckband 14 auf die Blechteile 11 aufgebracht werden kann. Um eine sichere Adhäsion des Abdeckbands 14 an der Oberfläche der Blechteile 11 zu ermöglichen, ist das Abdeckband 14 als Klebeband ausgeführt. Wie Fig. 10 andeutet, wird das Abdeckband 14 in einem dritten Verfahrensschritt derart bezüglich der Blechteile 11 angeordnet, dass alle Zwischenräume zwischen benachbarten Blechteilen 11 und alle quer zur Längsrichtung des Stegs 19.2 verlaufenden Kanten der Blechteile 11 durch das Abdeckband 14 abgedeckt sind (durch jeweils einen der streifenförmigen Abschnitte 14.2). Das Abdeckband 14 schützt die Blechteile 11 bei der Durchführung der folgenden Verfahrensschritte, insbesondere werden die Zwischenräume zwischen den Blechteilen 11 abgedichtet gegen das Eindringen von Giessmasse, welche zur Herstellung der Tragstruktur 15 benötigt wird.

Fig. 11 zeigt - in einem Querschnitt - das Ergebnis eines vierten Verfahrensschritts, der zum Einbetten der Blechteile 11 und der Körper 17 gemäss Fig. 10 in die Tragstruktur 15 und zu einer Befestigung der Blechteile 11 und der Körper 17 an dem Grundkörper 5 führt. Gemäss Fig. 11 ist die Lehre 19 zusammen mit den an der Lehre 19 befestigten Blechteilen 11 und Körpern 17 relativ zum Grundkörper 5 derart angeordnet, dass die Blechteile 11 und die Körper parallel zum Pfeil 1' (d.h. senkrecht zur Zeichenebene in Fig. 11) aneinandergereiht sind, wobei jeder Körper 17 in einem der Löcher 5.2 und jedes der Blechteile 11 innerhalb der Nut 5.1 platziert ist. Diese Anordnung der Blechteile 11 relativ zum Grundkörper 5 entspricht der Anordnung der Blechteile 11 gemäss Fig. 1 und 2. Diejenigen freien Räume innerhalb der Löcher 5.2 und der Nut 5.1, welche nicht durch die Blechteile 11 und die Körper 17 ausgefüllt sind, werden mit einer Giessmasse gefüllt, welche nach dem Aushärten die Tragstruktur 15 gemäss Fig. 1 und 2 bildet. Wie Fig. 11 weiter zeigt, weist jeder Körper 17 eine axiale Gewindebohrung 17.1 auf und ist mittels einer passenden Schraube 19.4, welche durch eine der Bohrungen 19.3 mit dem Gewinde der jeweiligen Gewindebohrung 17.1 in Eingriff gebracht ist, an der Lehre 19 befestigt.

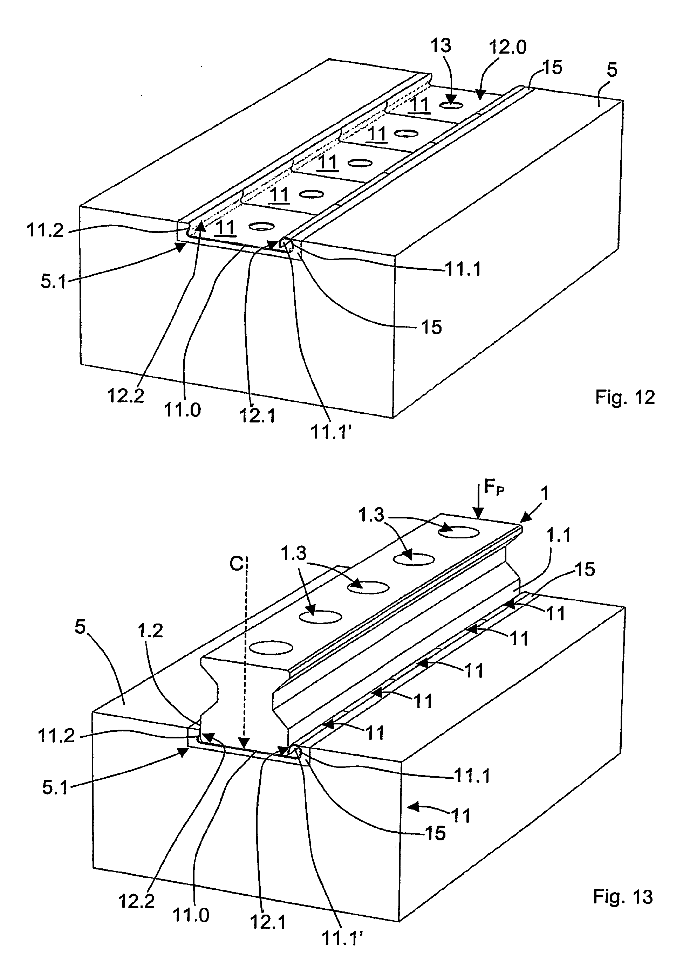

In einem fünften Verfahrensschritt wird die Lehre 19 - nach dem Einbetten der Blechteile 11 und der Körper 17 in die Tragstruktur 15 - von den Blechteilen 11 und Körpern 17 getrennt, indem die Schrauben 19.4 entfernt werden. Anschliessend wird die Lehre 19 entfernt, wie Fig. 12 zeigt. Auf diese Weise wird im Bereich der ebenen Abschnitte 11.0 der Blechteile 11 die Auflagefläche 12.0 für die Führungsschiene 1 bereitgestellt, und im Bereich der Seitenteile 11.1 und 11.2 der Blechteile 11 werden die erste Führungsfläche 12.1 und die zweite Führungsfläche 12.2 zur Führung der Führungsschiene 1 beim Aufbringen der Führungsschiene 1 auf die Auflagefläche 12.0 bereitgestellt.

In einem sechsten Verfahrensschritt (Fig. 13) wird die Führungsschiene 1 längs eines Weges C entlang der Führungsflächen 12.1 und 12.2 geführt und mit den ebenen Abschnitten 11.0 der Blechteile 11 in Kontakt gebracht, wobei die Führungsschiene dabei gegebenenfalls mit einer entlang des Weges C gerichteten Anpresskraft F_{P} belastet werden kann. Die Führungsschiene 1 wird dabei so positioniert, dass die Bohrungen 1.3 in der Führungsschiene 1 mit den Löchern 13 in den Blechteilen 11 (Fig. 12) und den Gewindebohrungen 17.1 in den Körpern 17 zur Deckung gebracht sind. Wie bereits erläutert, wird die Führungsschiene 1 beim Aufbringen auf die ebenen Abschnitte 11.0 in eine vorgegebene (durch die Befestigungsstruktur 10 bestimmte) Position gebracht und gegebenenfalls aufgrund einer Wechselwirkung mit den Führungsflächen 12.1 und 12.2 in eine gerade Form gebracht.

In einem siebten (und letzten) Verfahrensschritt kann die Führungsschiene 1 mit Schrauben 18, welche jeweils mit dem jeweiligen Gewinde einer der Gewindebohrungen 17.1 in Eingriff bringbar sind, an den Körpern 17 befestigt werden (Fig. 1).

Abweichend von der genannten Vorgehensweise können der vorstehend genannte sechste Verfahrensschritt und der siebte Verfahrenschritt auch gleichzeitig in Kombination miteinander angewendet werden, um die Führungsschiene 1 auf die ebenen Abschnitte 11.0 aufzubringen: Die Führungsschiene 1 kann zunächst- wie im genannten sechsten Verfahrensschritt - so auf der Befestigungsstruktur 10 positioniert werden, dass die Führungsschiene 1 mit den Führungsfläche 12.1 und 12.2 in Kontakt gebracht wird und zumindest so positioniert ist, dass die Bohrungen 1.3 in der Führungsschiene 1 mit den Löchern 13 in den Blechteilen 11 (Fig. 12) und den Gewindebohrungen 17.1 in den Körpern 17 zur Deckung gebracht sind. Dabei muss die Führungsschiene zunächst nicht (wie im sechsten Verfahrensschritt) entlang der Führungsflächen 12.1 und 12.2 bewegt werden und die Führungsschiene 1 zunächst nicht auf die Auflagefläche 12.0 aufgebracht werden. Anschliessend können die Schrauben 18 durch die Bohrungen 1.3 mit dem jeweiligen Gewinde einer der Gewindebohrungen 17.1 in Eingriff gebracht und anschliessend angezogen werden, bis die Führungsschiene 1 durch das Anziehen der Schrauben 18 auf die Auflagefläche 12.0 aufgebracht und an der Auflagefläche befestigt ist.

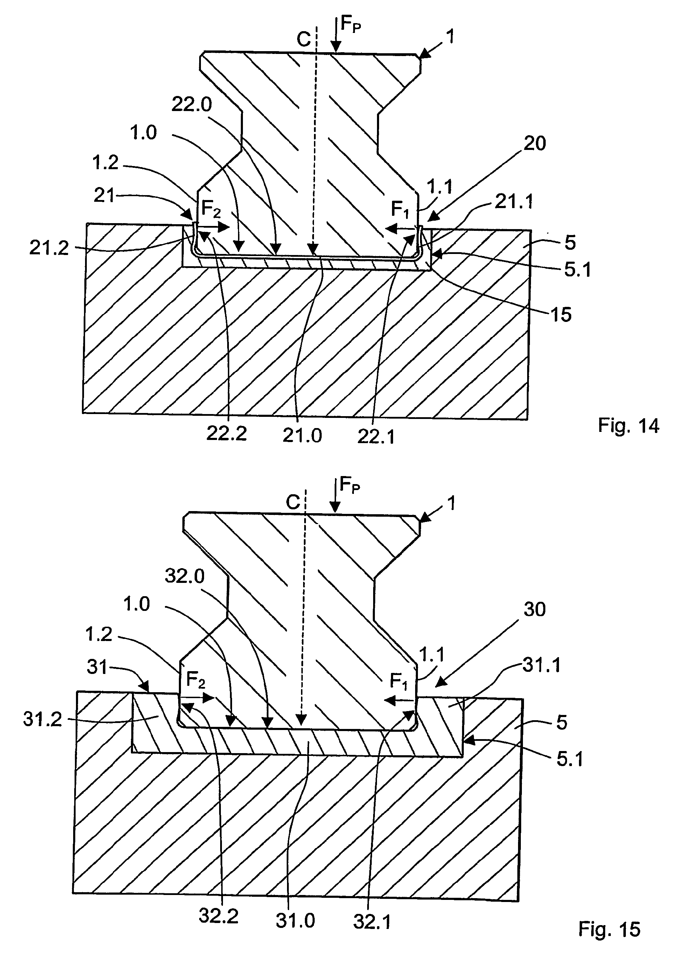

Die Fig. 14-18 zeigen weitere erfindungsgemässe Befestigungsstrukturen 20, 30, 40, 50 und 60 für die Führungsschiene 1. Die Befestigungsstrukturen 20, 30, 40, 50 und 60 haben mit der Befestigungsstruktur 10 u.a. gemeinsam, dass sie jeweils eine ebene Auflagefläche für die Grundfläche 1.0 der Führungsschiene 1 umfassen und ausserdem ein erstes und ein zweites Seitenteil umfassen, welche Seitenteile eine Führung der Führungsschiene 1 an der ersten Seitenfläche 1.1 und der zweiten Seitenfläche 1.2 gewährleisten, wenn die Führungsschiene 1 auf die jeweilige Auflagefläche aufgebracht wird. Die jeweiligen Seitenteile üben - wie im Falle der Befestigungsstruktur 10 - entsprechend Zwangskräfte F₁ und F₂ auf die Führungsschiene 1 aus, welche die Führungsschiene jeweils in eine vorgegebene (durch die jeweilige Befestigungsstruktur bestimmte) Position zwischen den jeweiligen Seitenteilen und in eine vorgegebene gerade Form zwingen. Die Befestigungsstrukturen 20, 30, 40, 50 und 60 unterscheiden sich von der Befestigungsstruktur 10 im Wesentlichen durch die Art, wie die Auflagefläche und die jeweiligen Seitenteile realisiert sind. Im Folgenden sollen hauptsächlich die jeweiligen Unterschiede erläutert werden. Gleiche Bezugszeichen verweisen im Folgenden auf gleiche bzw. gleichwirkende Teile. Befestigungsmittel 16 zur Befestigung der Führungsschiene 1 werden in den folgenden Beispielen nicht dargestellt.

Die Befestigungsstruktur 20 gemäss Fig. 14 umfasst ein Blechteil 21, welches bereichsweise (in etwa U-förmig) gebogen ist und einen ebenen Abschnitt 21.0, ein erstes Seitenteil 21.1 und ein zweites Seitenteil 21.2 aufweist. Alternativ können auch mehrere Blechteile 21 längs einer Geraden (senkrecht zur Zeichenebene in Fig. 14) aneinandergereiht sein. Das Blechteil 21 ist - ähnlich wie die Befestigungsstruktur 10 - in eine Tragstruktur 15 eingebettet, welche in der Nut 5.1 des Grundkörpers 5 angeordnet ist. Der ebene Abschnitt 21.0 bildet eine Auflagefläche 22.0 für die Führungsschiene 1 und die beiden Seitenteile 21.1 und 21.2 bilden eine erste und eine zweite Führungsfläche 22.1 bzw. 22.2 (in dieser Reihenfolge) für die Führungsschiene 1. Die beiden Führungsflächen 22.1 und 22.2 sind jeweils zum ebenen Abschnitt 21.0 hin konvex gekrümmt. Die Seitenteile 21.1 und 21.2 sind jeweils im Bereich der Führungsflächen 22.1 und 22.2 jeweils auf der von der Führungsschiene 1 abgewandten Seite durch die Tragstruktur 15 gestützt, sodass die Seitenteile 21.1 und 21.2 in etwa die gleiche Steifigkeit aufweisen, wenn die Führungsschiene auf die Auflagefläche 22.0 aufgebracht wird und dabei an den Führungsflächen 22.1 und 22.2 geführt wird. Die Steifigkeit der Seitenteile 21.1 und 21.2 wird wesentlich durch die elastischen Eigenschaften der Tragstruktur 15 und die elastischen Eigenschaften des Blechteils 21 bestimmt. Das Blechteil 21 besteht bevorzugt aus einem elastischen Material, beispielsweise Federstahl. Die Seitenteile 21.1 und 21.2 sind im Wesentlichen symmetrisch (zu einer zwischen den Seitenteilen 21.1 und 21.2 angeordneten Ebene) ausgebildet und sorgen deshalb dafür, dass die Führungsschiene 1 beim Aufbringen auf die Auflagefläche 22.0 (z.B. längs Weg C) in einer Gleichgewichtslage zwischen den Seitenteile 21.1 und 21.2 zentriert und eingeklemmt wird.

Die Befestigungsstruktur 30 gemäss Fig. 15 umfasst einen massiven Körper 31. Alternativ können auch mehrere massive Körper 31 längs einer Geraden (senkrecht zur Zeichenebene in Fig. 15) aneinandergereiht sein. Der massive Körper 31 weist eine Nut auf, welche durch einen ebenen Abschnitt 31.0, ein erstes Seitenteil 31.1 und ein zweites Seitenteil 31.2 begrenzt ist und zur Aufnahme der Führungsschiene 1 dient. Der ebene Abschnitt 31.0 bildet eine Auflagefläche 32.0 für die Führungsschiene 1 und die beiden Seitenteile 31.1 und 31.2 bilden eine erste und eine zweite Führungsfläche 32.1 bzw. 32.2 (in dieser Reihenfolge) für die Führungsschiene 1. Der massive Körper 31 ist bevorzugt aus einem Metall (z.B. Stahl) gefertigt und kann beispielsweise durch Strangpressen geformt oder durch eine Bearbeitung eines Körpers, z.B. mittels Schleifen oder Fräsen, hergestellt werden. Die Seitenteile 31.1 und 31.2 sind im Wesentlichen symmetrisch (zu einer zwischen den Seitenteilen 31.1 und 31.2 angeordneten Ebene) ausgebildet und sorgen deshalb dafür, dass die Führungsschiene 1 beim Aufbringen auf die Auflagefläche 32.0 (z.B. längs Weg C) einen Presssitz zwischen den Seitenteilen 31.1 und 31.2 einnimmt und dabei zwischen den Seitenteilen 31.1 und 31.2 zentriert wird.

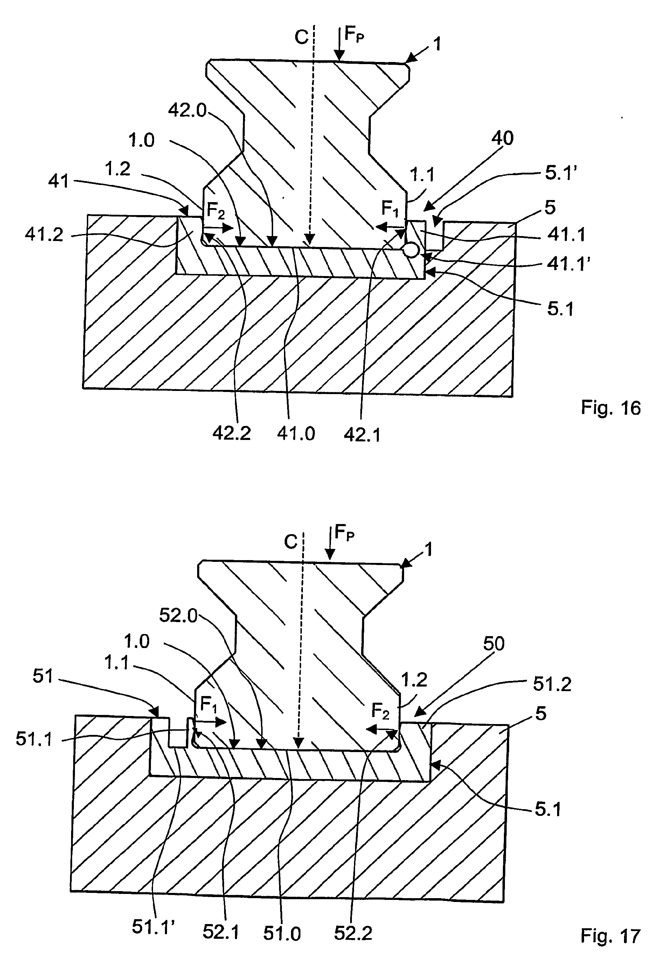

Die Befestigungsstrukturen 40, 50 und 60 gemäss Fig. 16-18 haben die gemeinsame Eigenschaft, dass sie Seitenteile aufweisen, die - anders als die jeweiligen Seitenteile 21.1 und 21.2 bzw. 31.1 und 31.2 der Befestigungsstrukturen 20 bzw. 30 und ähnlich wie die Seitenteile 11.1 und 11.2 der Befestigungsstruktur 10 - eine unterschiedliche Steifigkeit aufweisen und deshalb bei einer Wechselwirkung mit der Führungsschiene 1 nicht gleichartig (d.h. nicht "symmetrisch") reagieren, wenn die Führungsschiene 1 auf die jeweilige Auflagefläche aufgebracht wird.

Die Befestigungsstruktur 40 gemäss Fig. 16 umfasst einen massiven Körper 41, welcher eine Nut 41.0 mit ebenem Grund aufweist, wobei die Nut 41.0 durch ein erstes Seitenteil 41.1 und ein zweites Seitenteil 41.2 begrenzt ist. Alternativ können auch mehrere massive Körper 41 längs einer Geraden (senkrecht zur Zeichenebene in Fig. 16) aneinandergereiht sein. Der massive Körper 41 sitzt formschlüssig in einer Nut 5.1 des Grundkörpers 5. Der Grund der Nut 41.0 bildet eine Auflagefläche 42.0 für die Führungsschiene 1 und die beiden Seitenteile 41.1 und 41.2 bilden eine erste und eine zweite Führungsfläche 42.1 bzw. 42.2 (in dieser Reihenfolge) für die Führungsschiene 1. Der massive Körper 41 ist bevorzugt aus einem Metall (z.B. Stahl) gefertigt und kann beispielsweise durch Strangpressen geformt oder durch eine Bearbeitung eines Körpers, z.B. mittels Schleifen oder Fräsen, hergestellt werden. Im vorliegenden Fall hat das Seitenteil 41.1 eine geringere Steifigkeit als das Seitenteil 41.2. Diese "Asymmetrie" wird durch zwei Massnahmen erreicht. Einerseits ist die Wandstärke des Seitenteils 41.1 im Bereich eines unteren Abschnitts 41.1' am Grund der Nut 41.0 reduziert. Dadurch weist das Seitenteil 41.1 im Bereich des Abschnitts 41.1' eine relativ geringe Steifigkeit auf und ist bei einer Wechselwirkung mit der Führungsschiene 1 elastisch biegbar. Weiterhin ist in der Nut 5.1 im oberen Bereich des Seitenteils 41.1 auf der von der Führungsschiene 1 abgewandten Seite ein freier Raum 5.1' geschaffen, in welchen das Seitenteil 41.1 bei seitlichen Auslenkungen quer zur Längsrichtung 1' der Führungsschiene 1 ausweichen kann. Diese Massnahme reduziert die Steifigkeit des Seitenteils 41.1 im Vergleich zur Steifigkeit des Seitenteils 41.2 zusätzlich.

Beim Aufbringen der Führungsschiene 1 auf die Auflagefläche 42.0 längs des Weges C wird die Führungsschiene 1 (an den Seitenflächen 1.1 bzw. 1.2) mit der ersten Führungsfläche 42.1 und der zweiten Führungsfläche 42.2 in Kontakt gebracht. Das Seitenteil 41.1 wird dabei elastisch deformiert und erzeugt eine Rückstellkraft F₁, welche die Führungsschiene gegen das Seitenteil 41.2 presst und dafür sorgt, dass die Führungsschiene zwischen den Seitenteilen 41.1 und 41.2 eingeklemmt wird. Das Seitenteil 41.2 hat im vorliegenden Fall eine grössere Steifigkeit als das Seitenteil 41.1 und bildet dementsprechend eine (im Wesentlichen starre) Anschlagskante für die Führungsschiene 1.1. Das Seitenteil 41.2 bestimmt folglich die jeweilige Position und die jeweilige Form, welche die Führungsschiene 1 nach dem Aufbringen auf die Auflagefläche 42.0 einnimmt bzw. annimmt.

Die Befestigungsstruktur 50 gemäss Fig. 17 umfasst einen massiven Körper 51. Alternativ können auch mehrere massive Körper 51 längs einer Geraden (senkrecht zur Zeichenebene in Fig. 17) aneinandergereiht sein. Der massive Körper 51 ist formschlüssig in der Nut 5.1 des Grundkörpers 5 untergebracht und weist zwei nebeneinander angeordnete, sich geradlinig (senkrecht zur Zeichenebene in Fig. 17) erstreckende Nuten auf: eine erste Nut 51.0 mit ebenem Grund, welche zur Aufnahme der Führungsschiene 1 dient, und eine zweite Nut 51.1', welche parallel zur Nut 51.0 in Längsrichtung der Führungsschiene 1 ausgebildet ist. Die erste Nut 51.0 wird seitlich durch ein erstes Seitenteil 51.1 und ein zweites Seitenteil 51.2 begrenzt. Der Grund der Nut 51.0 bildet eine Auflagefläche 52.0 für die Führungsschiene 1 und die beiden Seitenteile 51.1 und 51.2 bilden eine erste und eine zweite Führungsfläche 52.1 bzw. 52.2 (in dieser Reihenfolge) für die Führungsschiene 1. Der massive Körper 51 ist bevorzugt aus einem Metall (z.B. Stahl) gefertigt und kann beispielsweise durch Strangpressen geformt oder durch eine Bearbeitung eines Körpers, z.B. mittels Schleifen oder Fräsen, oder durch eine Kombination der vorstehend genannten Verfahren hergestellt werden. Wie Fig. 17 entnehmbar ist, ist das zweite Seitenteil 51.2 auf der von der Führungsschiene 1 abgewandten Seite durch den Grundkörper 5 abgestützt und weist daher bei einer Wechselwirkung mit der Führungsschiene 1 eine hohe Steifigkeit auf. Die Steifigkeit des zweiten Seitenteils 52.1 wird wesentlich durch die Dicke des Seitenteils 52.1 bestimmt. Durch eine geeignete Anordnung der zweiten Nut 51.1' relativ zur Führungsfläche 52.1 kann somit die Steifigkeit des Seitenteils 51.1 im Vergleich zur Steifigkeit des Seitenteils 51.2 auf das jeweils gewünschte Mass reduziert werden.

Beim Aufbringen der Führungsschiene 1 auf die Auflagefläche 52.0 längs des Weges C wird die Führungsschiene 1 (an den Seitenflächen 1.1 bzw. 1.2) mit der ersten Führungsfläche 52.1 und der zweiten Führungsfläche 52.2 in Kontakt gebracht. Das Seitenteil 51.1 wird dabei elastisch deformiert und erzeugt eine Rückstellkraft F₁, welche die Führungsschiene gegen das Seitenteil 51.2 presst und dafür sorgt, dass die Führungsschiene zwischen den Seitenteilen 51.1 und 51.2 eingeklemmt wird.

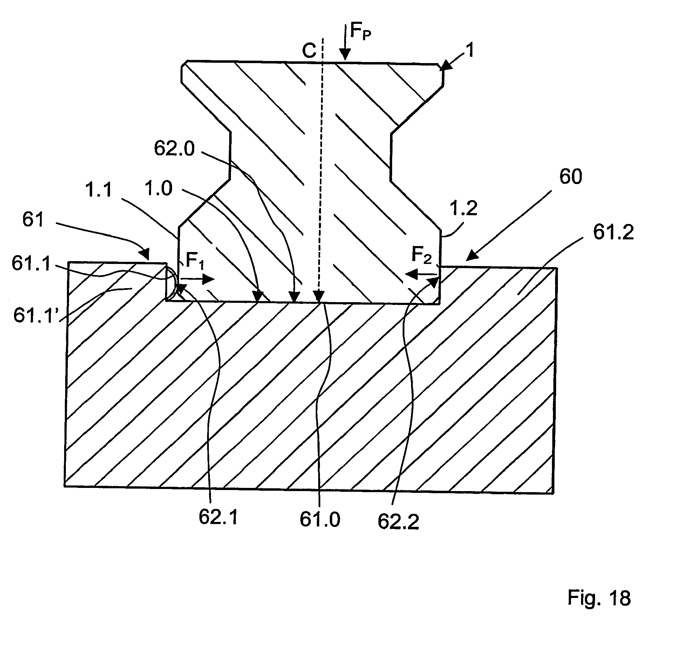

Die Befestigungsstruktur 60 gemäss Fig. 18 umfasst einen massiven Körper 61, welcher an einer Seite eine sich (senkrecht zur Zeichenebene) geradlinig erstreckende Nut 61.0 aufweist. Alternativ können auch mehrere massive Körper 61 längs einer Geraden (senkrecht zur Zeichenebene in Fig. 18) aneinandergereiht sein. Die Nut 61.0 hat einen ebenen Grund und ist seitlich begrenzt durch zwei gegenüberliegende Wandteile 61.2 und 61.1' des massiven Körpers 61. Der massive Körper 61 kann beispielsweise aus einem Metall (z.B. Stahl) gefertigt sein und kann beispielsweise durch Strangpressen geformt oder durch eine Bearbeitung eines Körpers, z.B. mittels Schleifen oder Fräsen, hergestellt werden. Alternativ kann der massive Körper 61 als Gusskörper (aus Metall oder Mineralguss) ausgebildet sein. Der massive Körper 61 kann weiterhin in einen anderen Grundkörper eingebettet werden.

Die Nut 61.0 dient der Aufnahme der Führungsschiene 1. Wie Fig. 18 zeigt, hat die Nut 61.0 eine Breite, die grösser ist als die Breite der Führungsschiene 1 im Bereich der Grundfläche 1.0. Der Grund der Nut 61.0 bildet eine Auflagefläche 62.0 für die Führungsschiene 1. Ein erstes Führungsmittel im Sinne der Erfindung ist im vorliegenden Beispiel durch ein Federelement 61.1 realisiert, welches an dem Wandteil 61.1 in der Nut 61.0 angeordnet ist. Das Federelement 61.1 besteht im vorliegenden Fall aus einem elastischen, streifenförmigen Band (z.B. aus Federstahl), welches sich einerseits parallel zur Längsrichtung der Nut 61.0 erstreckt und andererseits in einer Ebene senkrecht zur Längsrichtung der Nut 61.0 bogenförmig (konvex) in Richtung auf das Wandteil 61.2 gewölbt ist. Ein zweites Führungsmittel im Sinne der Erfindung ist im vorliegenden Beispiel durch das Wandteil 61.2 realisiert. Dementsprechend bildet die dem Wandteil 61.2 zugewandte Oberfläche des Federelements 61.1 eine erste Führungsfläche 62.1 für die Führungsschiene 1 und die dem Federelement 61.1 zugewandte Oberfläche des Wandteils 61.2 eine zweite Führungsfläche 62.2 für die Führungsschiene 1.

Beim Aufbringen der Führungsschiene 1 auf die Auflagefläche 62.0 längs des Weges C wird die Führungsschiene 1 (an den Seitenflächen 1.1 bzw. 1.2) mit der ersten Führungsfläche 62.1 und der zweiten Führungsfläche 62.2 in Kontakt gebracht. Das Federelement 61.1 ist so angeordnet, dass es beim Aufbringen der Führungsschiene 1 auf die Auflagefläche 62.0 elastisch deformiert wird. Dabei erzeugt das Federelement 61.1 eine Rückstellkraft F₁, welche die Führungsschiene 1 gegen das Wandteil 61.2 presst. Das Wandteil 61.2 hat im vorliegenden Fall eine grössere Steifigkeit als das Federelement 61.1 und bildet dementsprechend eine (im Wesentlichen starre) Anschlagskante für die Führungsschiene 1.1. Die Führungsschiene 1 wird dementsprechend zwischen dem Federelement 61.1 und dem Wandteil 61.2 eingeklemmt, wobei das Wandteil 61.1 die jeweilige Position und die jeweilige Form bestimmt, welche die Führungsschiene 1 nach dem Aufbringen auf die Auflagefläche 62.0 einnimmt bzw. annimmt.

Das Federelement 61.1 kann im Rahmen der Erfindung auch durch ein oder mehrere Federelemente anderer Bauart ersetzt werden. Relevant ist hauptsächlich, dass das jeweilige Federelement beim Aufbringen der Führungsschiene 1 auf die Auflagefläche 62.0 deformiert bzw. gespannt wird und eine Rückstellkraft des jeweiligen Federelements die Führungsschiene 1 gegen die zweite Führungsfläche 62.2 drückt.

Im Falle der Befestigungsstrukturen 30, 40, 50 und 60 kann es zweckmässig sein, den jeweiligen massiven Körper 31, 41, 51 bzw. 61 nach dem Einbetten nachträglich zu bearbeiten (z.B. mittels Fräsen oder Schleifen). Die nachträgliche Bearbeitung ermöglicht es, die jeweiligen Auflageflächen 32.0, 42.0, 52.0 und 62.0 und Führungsflächen 32.1, 42.1, 52.1 62.1, 32.2, 42.2, 52.2 und 62.2 mit einer besonders grossen Genauigkeit zu fertigen, selbst wenn der jeweilige massive Körper beim Einbetten deformiert oder gegenüber einer vorbestimmten Position verschoben werden sollte.

Im Falle der Befestigungsstruktur 50 kann es zweckmässig sein, die Nut 51.1 erst nach dem Einbetten in den Grundkörper 5 herzustellen oder zu bearbeiten. Auf diese Weise kann das erste Seitenteil 51.1 mit besonders geringen Toleranzen geformt und die Steifigkeit des Seitenteils 51.1 gegebenenfalls nachträglich geändert werden.

## Patentansprüche

1. Befestigungsstruktur (10, 20, 30, 40, 50, 60) zum Befestigen einer Führungsschiene (1) eines Linearführungssystems an einer vorgegebenen Position in einer vorgegebenen geraden Form, welche Führungsschiene (1) eine Grundfläche (1.0) und eine erste Seitenfläche (1.1) und eine zweite Seitenfläche (1.2) aufweist, wobei die Seitenflächen (1.1, 1.2) an einander gegenüberliegenden Seiten der Führungsschiene ausgebildet sind,
welche Befestigungsstruktur (10, 20, 30, 40, 50, 60) umfasst:
eine ebene Auflagefläche (12.0, 22.0, 32.0, 42.0, 52.0, 62.0)für die Führungsschiene und
Befestigungsmittel (16, 17, 18) zum Befestigen der Führungsschiene (1) an der Auflagefläche (12.0, 22.0, 32.0, 42.0, 52.0, 62.0),
wobei die Führungsschiene (1) vor dem Befestigen oder beim Befestigen derart auf die Auflagefläche aufbringbar ist, dass die Grundfläche (1.0) der Führungsschiene in Kontakt mit der Auflagefläche (12.0, 22.0, 32.0, 42.0, 52.0, 62.0) ist,
**dadurch gekennzeichnet, dass**
die Befestigungsstruktur (10, 20, 30, 40, 50, 60) einander gegenüberliegend angeordnete erste und zweite Führungsmittel (11.1, 21.1, 31.1, 41.1, 51,1, 61.1; 11.2, 21.2, 31.2, 41.2, 51,2, 61.2) zum Führen der Führungsschiene längs eines vorgegebenen Weges (C) beim Aufbringen der Führungsschiene (1) auf die Auflagefläche (12.0, 22.0, 32.0, 42.0, 52.0, 62.0) umfasst,
wobei die ersten Führungsmittel (11.1, 21.1, 31.1, 41.1, 51,1, 61.1) eine erste Führungsfläche (12.1, 22.1, 32.1, 42.1, 52,1, 62.1) aufweisen, welche dazu dient, die Führungsschiene (1) beim Aufbringen auf die Auflagefläche (12.0, 22.0, 32.0, 42.0, 52.0, 62.0) an der ersten Seitenfläche (1.1) zu führen, und
wobei die zweiten Führungsmittel (11.2, 21.2, 31.2, 41.2, 51,2, 61.2) eine zweite Führungsfläche (12.2, 22.2, 32.2, 42.2, 52,2, 62.2) aufweisen, welche dazu dient, die Führungsschiene (1) beim Aufbringen auf die Auflagefläche (12.0, 22.0, 32.0, 42.0, 52.0, 62.0) an der zweiten Seitenfläche (1.2) zu führen, und
wobei die Führungsmittel (11.1, 21.1, 31.1, 41.1, 51,1, 61.1; 11.2, 21.2, 31.2, 41.2, 51,2, 61.2) derart ausgebildet sind, dass sie beim Aufbringen der Führungsschiene auf die Auflagefläche jeweils Zwangskräfte (F₁, F₂) parallel zur Auflagefläche (12.0, 22.0, 32.0, 42.0, 52.0, 62.0) auf die erste und die zweite Seitenfläche (1.1, 1.2) der Führungsschiene ausüben, welche Zwangskräfte (F₁, F₂) eine Ausrichtung der Führungsschiene derart erzwingen, dass die Führungsschiene beim Aufbringen auf die Auflagefläche die vorgegebene Position einnimmt und die vorgegebene gerade Form annimmt.

2. Befestigungsstruktur (10, 40, 50, 60) nach Anspruch 1,
**dadurch gekennzeichnet, dass**
die zweite Führungsfläche (12.2, 42.2, 52,2, 62.2) eine grössere Steifigkeit als die erste Führungsfläche (12.1, 42.1, 52,1, 62.1) aufweist und einen mechanischen Anschlag mit einer geraden Anschlagskante für die zweite Seitenfläche (1.2) der Führungsschiene bildet
und die erste Führungsfläche (12.1, 22.1, 42.1, 52.1, 62.1) bei einem mechanischen Kontakt mit der ersten Seitenfläche (1.1) der Führungsschiene aus einer vorbestimmten Ruhelage auslenkbar ist,
wobei bei der Auslenkung der ersten Führungsfläche Rückstellkräfte (F₁) erzeugt werden, welche der jeweiligen Auslenkung der ersten Führungsfläche (12.1, 22.1, 42.1, 52.1, 62.1) entgegenwirken, und
wobei die Führungsschiene (1) gegen die Anschlagskante mittels der auf die erste Führungsfläche (12.1, 22.1, 42.1, 52.1, 62.1) wirkenden Rückstellkräfte (F₁) pressbar ist.

3. Befestigungsstruktur (10, 20, 30, 40, 50, 60) nach Anspruch 1 oder 2, **dadurch gekennzeichnet, dass** die erste Führungsfläche (12.1, 22.1, 42.1, 52.1, 62.1) elastisch angeordnet oder elastisch deformierbar ist.

4. Befestigungsstruktur (20, 30) nach einem der Ansprüche 1 oder 3, **dadurch gekennzeichnet, dass**
die erste und die zweite Führungsfläche (22.1, 32.1; 22.2, 32.2) dieselbe Steifigkeit aufweisen und derart angeordnet sind, dass die beiden Führungsflächen bei einem Kontakt mit der jeweilige Führungsschiene in entgegengesetzte Richtungen auslenkbar sind.

5. Befestigungsstruktur (30, 40, 50) nach einem der Ansprüche 1-4, **dadurch gekennzeichnet, dass**
die Auflagefläche (30.0, 40.0, 50.0), die erste Führungsfläche (30.1, 40.1, 50.1) und die zweite Führungsfläche (30.2, 40.2, 50.2) in einem massiven Körper (31, 41, 51) aus Metall mittels Formen oder Bearbeiten des Körpers ausgebildet sind.

6. Befestigungsstruktur (30, 40, 50) nach Anspruch 5, **dadurch gekennzeichnet, dass**
der massive Körper (31, 41, 51) in eine Tragstruktur (5) aus Mineralguss eingebettet ist.

7. Befestigungsstruktur (10, 20) nach einem der Ansprüche 1-4, **dadurch gekennzeichnet, dass**
ein zumindest bereichsweise gebogenes Blechteil (11, 21) in eine Tragstruktur (15) eingebettet ist, wobei das Blechteil (11, 21) die Auflagefläche (12.0, 22.0), die erste Führungsfläche (12.1, 22.1) und die zweite Führungsfläche (12.2, 22.2) umfasst.

8. Befestigungsstruktur (10, 20) nach einem der Ansprüche 1-4, **dadurch gekennzeichnet, dass**
mehrere zumindest bereichsweise gebogene Blechteile (11, 21) derart in eine Tragstruktur (15) eingebettet sind, dass die Blechteile (11, 21) in Richtung einer Geraden (1') jeweils aneinandergereiht angeordnet sind und jedes der Blechteile (11, 21) jeweils einen Abschnitt der Auflagefläche (12.0, 22.0), einen Abschnitt der ersten Führungsfläche (12.1, 12.1) und/oder einen Abschnitt der zweiten Führungsfläche (12.2, 12.2) bilden.

9. Befestigungsstruktur (10, 20) nach einem der Ansprüche 7-8, **dadurch gekennzeichnet, dass**
die Tragstruktur (15) als Mineralguss-Körper ausgebildet ist.

10. Befestigungsstruktur (10, 20) nach einem der Ansprüche 7-9, **dadurch gekennzeichnet, dass**
das Blechteil (11, 21) umfasst:
(i) einen ebenen Abschnitt (11.0, 21.0), welcher die Auflagefläche oder einen Abschnitt der Auflagefläche bildet,
(ii) ein an den ebenen Abschnitt angrenzendes, in Längsrichtung (1') der Führungsschiene angeordnetes erstes Seitenteil (11.1, 21.1), welches die erste Führungsfläche (12.1, 22.1) oder einen Abschnitt der ersten Führungsfläche bildet, und
(iii) ein an den ebenen Abschnitt angrenzendes, in Längsrichtung (1') der Führungsschiene angeordnetes und dem ersten Seitenteil gegenüberliegendes zweites Seitenteil (11.2, 21.2), welches die zweite Führungsfläche (12.2, 22.2) oder einen Abschnitt der zweiten Führungsfläche bildet,
wobei die Seitenteile (11.1, 11.2; 21.1, 21.2) zu derselben Seite des ebenen Abschnitts (11.0, 21.0) hin abgebogen sind.

11. Befestigungsstruktur (10, 20) nach Anspruch 10, **dadurch gekennzeichnet, dass** das zweite Seitenteil (11.2, 21.2) auf der von dem ebenen Abschnitt (11.0, 21.0) abgewandten Seite durch die Tragstruktur (15) abgestützt ist.

12. Befestigungsstruktur (10) nach einem der Ansprüche 10-11, **dadurch gekennzeichnet, dass**
das erste Seitenteil (11.1) einen freitragenden Teilbereich (11.1') aufweist, welcher quer zur Längsrichtung der Führungsschiene (1) elastisch biegsam ist.

13. Befestigungsstruktur (10, 20) nach einem der Ansprüche 10-12, **dadurch gekennzeichnet, dass**
das erste Seitenteil (11.1) und/oder das zweite Seitenteil (11.2) in einer Ebene quer zur Längsrichtung (1') der Führungsschiene zum ebenen Abschnitt (11.0) hin konvex gekrümmt ist.

14. Befestigungsstruktur (10) nach einem der Ansprüche 10-13, **dadurch gekennzeichnet, dass** das jeweilige Seitenteil (11.1) die Form einer Rolle aufweist.

15. Verfahren zum Befestigen einer Führungsschiene (1) eines Linearführungssystems an einer vorgegebenen Position in einer vorgegebenen geraden Form, welche Führungsschiene (1) eine Grundfläche (1.0) und eine erste und eine zweite Seitenfläche (1.1, 1.2) aufweist, wobei die Seitenflächen (1.1, 1.2) an einander gegenüberliegenden Seiten der Führungsschiene (1) ausgebildet sind,
welches Verfahren die folgenden Schritt umfasst:
(i) Bereitstellen einer Befestigungsstruktur (10, 20, 30, 40, 50, 60), welche Befestigungsstruktur eine ebene Auflagefläche (12.0, 22.0, 32.0, 42.0, 52.0, 62.0) für die Führungsschiene (1) und Befestigungsmittel (16, 17, 18) zum Befestigen der Führungsschiene an der Auflagefläche umfasst,
(ii) Aufbringen der Führungsschiene (1) auf die Auflagefläche (12.0, 22.0, 32.0, 42.0, 52.0, 62.0) längs eines vorgegebenen Weges (C) derart, dass die Grundfläche (1.0) der Führungsschiene in Kontakt mit der Auflagefläche (12.0, 22.0, 32.0, 42.0, 52.0, 62.0) gebracht wird,
(iii) Befestigen der Führungsschiene (1) mittels der Befestigungsmittel (16, 17, 18),
**dadurch gekennzeichnet, dass**
der Schritt "Bereitstellen der Befestigungsstruktur" umfasst,
dass einander gegenüberliegend angeordnete erste und zweite Führungsmittel (11.1, 21.1, 31.1, 41.1, 51,1, 61.1; 11.2, 21.2, 31.2, 41.2, 51,2, 61.2) bereitgestellt werden, welche die Führungsschiene (1) beim Aufbringen der Führungsschiene (1) auf die Auflagefläche (12.0, 22.0, 32.0, 42.0, 52.0, 62.0) zumindest längs eines Teils des vorgegebenen Weges (C) führen,
wobei die ersten Führungsmittel (11.1, 21.1, 31.1, 41.1, 51,1, 61.1) eine erste Führungsfläche (12.1, 22.1, 32.1, 42.1, 52,1, 62.1) aufweisen, welche die Führungsschiene (1) beim Aufbringen auf die Auflagefläche (12.0, 22.0, 32.0, 42.0, 52.0, 62.0) an der ersten Seitenfläche (1.1) führt, und
wobei die zweiten Führungsmittel (11.2, 21.2, 31.2, 41.2, 51,2, 61.2) eine zweite Führungsfläche (12.2, 22.2, 32.2, 42.2, 52,2, 62.2) aufweisen, welche die Führungsschiene (1) beim Aufbringen auf die Auflagefläche (12.0, 22.0, 32.0, 42.0, 52.0, 62.0) an der zweiten Seitenfläche (1.2) führt, und
wobei die Führungsmittel (11.1, 21.1, 31.1, 41.1, 51,1, 61.1; 11.2, 21.2, 31.2, 41.2, 51,2, 61.2) derart ausgebildet sind, dass sie beim Aufbringen der Führungsschiene auf die Auflagefläche jeweils Zwangskräfte (F₁, F₂) parallel zur Auflagefläche (12.0, 22.0, 32.0, 42.0, 52.0, 62.0) auf die erste und die zweite Seitenfläche (1.1, 1.2) der Führungsschiene ausüben, welche Zwangskräfte (F₁, F₂) eine Ausrichtung der Führungsschiene (1) derart erzwingen, dass die Führungsschiene beim Aufbringen auf die Auflagefläche die vorgegebene Position einnimmt und die vorgegebene gerade Form annimmt.

16. Verfahren nach Anspruch 15, **dadurch gekennzeichnet, dass** ein zumindest bereichsweise gebogenes Blechteil (11, 21) in eine Tragstruktur (15) eingebettet wird, wobei ein erster Abschnitt (11.1, 21.1) des Blechteils (11, 21) die erste Führungsfläche (12.1, 22.1), eine zweiter Abschnitt (11.1, 21.1) des Blechteils die zweite Führungsfläche (12.2, 22.2) und ein zwischen dem ersten und dem zweiten Abschnitt des Blechteils angeordneter ebener Abschnitt (11.0, 21.0) des Blechteils die Auflagefläche (12.0, 22.0) bildet.

17. Verfahren nach Anspruch 15, **dadurch gekennzeichnet, dass** mehrere Blechteile (11) jeweils derart geformt werden, dass jedes Blechteil (11) zumindest bereichsweise gebogen ist und jeweils einen Abschnitt der Auflagefläche (12.0), einen Abschnitt der ersten Führungsfläche (12.1) und/oder einen Abschnitt der zweiten Führungsfläche (12.2) bildet, und diese Blechteile (11) an einer Lehre (19) längs einer Geraden jeweils aneinandergereiht befestigt werden und zusammen mit der Lehre (19) relativ zu einem Grundkörper (5) positioniert werden und anschliessend gemeinsam an dem Grundkörper (5) fixiert werden, wobei die Gesamtheit der Blechteile (11) die erste Führungsfläche (12.1), die zweite Führungsfläche (12.2) und die Auflagefläche (12.0) bilden.

18. Verfahren nach Anspruch 17, **dadurch gekennzeichnet, dass** der Grundkörper (5) einen mit einer aushärtbaren Giessmasse ausfüllbaren Raumbereich (5.1) umfasst und dass das jeweilige Blechteil (11) in diesem Raumbereich (5.1) relativ zum Grundkörper (5) positioniert wird und anschliessend durch Umgiessen mit der Giessmasse an dem Grundkörper fixiert wird.

19. Verfahren nach Anspruch 18, **dadurch gekennzeichnet, dass** die Giessmasse eine Mischung von Materialien zur Herstellung eines Mineralguss-Körpers ist.

## Claims

1. A fastening structure (10, 20, 30, 40, 50, 60) for fastening a guide rail (1) of a linear guidance system at a specified position in a specified straight shape, which guide rail (1) has a base surface (1.0) and a first lateral surface (1.1) and a second lateral surface (1.2), wherein the lateral surfaces (1.1, 1.2) are formed on opposing sides of the guide rail,
said fastening structure (10, 20, 30, 40, 50, 60) comprising:
a plane support surface (12.0, 22.0, 32.0, 42.0, 52.0, 62.0) for the guide rail, and
fastening means (16, 17, 18) for fastening the guide rail (1) to the support surface (12.0, 22.0, 32.0, 42.0, 52.0, 62.0),
wherein prior to fastening or during fastening, the guide rail (1) can be applied onto the support surface in such a manner that the base surface (1.0) of the guide rail is in contact with the support surface (12.0, 22.0, 32.0, 42.0, 52.0, 62.0),
**characterized in that**
the fastening structure (10, 20, 30, 40, 50, 60) comprises first and second guide means (11.1, 21.1, 31.1, 41.1, 51.1, 61.1; 11.2, 21.2, 31.2, 41.2, 51.2, 61.2) for guiding the guide rail along a specified path (C) when applying the guide rail (1) onto the support surface (12.0, 22.0, 32.0, 42.0, 52.0, 62.0),
wherein the first guide means (11.1, 21.1, 31.1, 41.1, 51.1, 61.1) have a first guide surface (12.1, 22.1, 32.1, 42.1, 52.1, 62.1) which serves for guiding the guide rail (1) at the first lateral surface (1.1) when applying said guide rail onto the support surface (12,0, 22.0, 32.0, 42.0, 52.0, 62.0), and
wherein the second guide means (11.2, 21.2, 31.2, 41.2, 51.2, 61.2) have a second guide surface (12.2, 22.2, 32.2, 42.2, 52.2, 62.2) which serves for guiding the guide rail (1) at the second lateral surface (1.2) when applying said guide rail onto the support surface (12.0, 22.0, 32.0, 92.0, 52.0, 62.0), and
wherein the guide means (11.1, 21.1, 31.1, 41.1, 51.1, 61.1; 11.2, 21.2, 31.2, 41.2, 51.2, 61.2) are designed such that when applying the guide rail onto the support surface, said guide means exert in each case constraining forces (F₁, F₂) parallel to the support surface (12.0, 22.0 32.0, 42.0, 52.0, 62.0) onto the first and second lateral surfaces (1.1, 1.2) of the guide rail, which constraining forces (F₁, F₂) force an alignment of the guide rail in such a manner that the guide rail, when being applied onto the support surface, takes the specified position and adopts the specified straight shape.

2. The fastening structure (10, 40, 50, 60) according to claim 1,
**characterized in that**
the second guide surface (12.2, 42.2, 52.2, 62.2) has a higher stiffness than the first guide surface (12.1, 42.1, 52.1, 62.1) and forms a mechanical stop with a straight stop edge for the second lateral surface (1.2) of the guide rail,
and upon mechanical contact with the first lateral surface (1.1) of the guide rail, the first guide surface (12.1, 22.1, 42.1, 52.1, 62.1) can be deflected from a predetermined rest position,
wherein during the deflection of the first guide surface, restoring forces (F₁) are generated which counteract the respective deflection of the first guide surface (12.1, 22.1, 42.1, 52.1, 62.1), and
wherein the guide rail (1) can be pressed against the stop edge by means of the restoring forces (F₁) acting on the first guide surface (12.1, 22.1, 42.1, 52.1, 62.1).

3. The fastening structure (10, 20, 30, 40, 50, 60) according to claim 1 or claim 2, **characterized in that**
the first guide surface (12.1, 22.1, 42.1, 52.1, 62.1) is disposed elastically or is elastically deformable.

4. The fastening structure (20, 30) according to claim 1 or claim 3, **characterized in that**
the first and the second guide surfaces (22.1, 32.1, 22.2, 32.2) have the same stiffness and are arranged in such a manner that the two guide surfaces, upon contact with the respective guide rail, can be deflected in opposite directions.

5. The fastening structure (30, 40, 50) according to any one of the claims 1 to 4, **characterized in that**
the support surface (30.0, 40.0, 50.0), the first guide surface (30.1, 40.1, 50.1) and the second guide surface (30.2, 40.2, 50.2) are formed in a solid body (31, 41, 51) from metal by means of moulding or machining the body.

6. The fastening structure (30, 40, 50) according to claim 5, **characterized in that**
the solid body (31, 41, 51) is embedded in a support structure (5) from mineral casting.

7. The fastening structure (10, 20) according to any one of the claims 1 to 4, **characterized in that**
an at least partially bent sheet metal part (11, 21) is embedded in a support structure (15), wherein the sheet metal part (11, 21) comprises the support surface (12.0, 22.0), the first guide surface (12.1, 22.1) and the second guide surface (12.2, 22.2).

8. The fastening structure (10, 20) according to any one of the claims 1 to 4, **characterized in that**
a plurality of sheet metal parts (11, 21) that are bent at least in certain areas are embedded in such a manner into a support structure (15) that the sheet metal parts (11, 21) are arranged in each case strung together in the direction of a straight line (1'), and each of the sheet metal parts (11, 21) forms in each case a section of the support surface (12.0, 22.0), a section of the first guide surface (12.1, 22,1) and/or a section of the second guide surface (12.2, 22.2).

9. The fastening structure (10, 20) according to any one of the claims 7 to 8, **characterized in that** the support structure (15) is designed as a mineral casting body.

10. The fastening structure (10, 20) according to any one of the claims 7 to 9, **characterized in that** the sheet metal part (11, 21) comprises:
(i) a plane section (11.0, 21.0) which forms the support surface or a section of the support surface,
(ii) a first lateral part (11.1, 21.1) which adjoins the plane section and is arranged in the longitudinal direction (1') of the guide rail and which forms the first guide surface (12.1, 22.1) or a section of the first guide surface, and
(iii) a second lateral part (11.2, 21.2) opposite to the first lateral part, which second lateral part adjoins the plane section and is arranged in the longitudinal direction (1') of the guide rail and which forms the second guide surface (12.2, 22.2) or a section of the second guide surface,
wherein the lateral parts (11.1, 11.2; 21.1, 21.2) are bent toward the same side of the plane section (11.0, 21.0).

11. The fastening structure (10, 20) according to claim 10, **characterized in that** the second lateral part (11.2, 21.2) is supported on the side facing away from the plane section (11.0, 21.0) by the support structure (15).

12. The fastening structure (10) according to any one of the claims 10 to 11, **characterized in that**
the first lateral part (11.1) has a self-supporting portion (11.1') which is elastically bendable transverse to the longitudinal direction of the guide rail (1).

13. The fastening structure (10, 20) according to any one of the claims 10 to 12, **characterized in that**
in a plane transverse to the longitudinal direction (1') of the guide rail, the first lateral part (11.1) and/or the second lateral part (11.2) is convexly curved toward the plane section (11.0).

14. The fastening structure (10) according to any one of the claims 10 to 13, **characterized in that** the respective lateral part (11.1) has the shape of a roller.

15. A method for fastening a guide rail (1) of a linear guidance system at a specified position in a specified straight shape, which guide rail (1) has a base surface (1.0) and a first and a second lateral surface (1.1, 1.2), wherein the lateral surfaces (1.1, 1.2) are formed on opposing sides of the guide rail (1),
the method comprising the following steps:
(i) providing a fastening structure (10, 20, 30, 40, 50, 60), which fastening structure comprises a plane support surface (12.0, 22.0, 32.0, 42.0, 52.0, 62.0) for the guide rail (1) and fastening means (16, 17, 18) for fastening the guide rail to the support surface,
(ii) applying the guide rail (1) onto the support surface (12.0, 22.0, 32.0, 42.0, 52.0, 62.0) along a specified path (C) in such a manner that the base surface (1.0) of the guide rail is brought into contact with the support surface (12.0, 22.0, 32.0, 42.0, 52.0, 62.0),
(iii) fastening the guide rail (1) by means of the fastening means (16, 17, 18),
**characterized in that**
the step "providing the fastening structure" comprises,
that first and second guide means (11.1, 21.1, 31.1, 41.1, 51.1, 61.1; 11.2, 21.2, 31.2, 41.2, 51.2, 61.2) are provided which are arranged opposite one another and which guide the guide rail (1) at least along a portion of the specified path (C) when applying the guide rail (1) onto the support surface (12.0, 22.0, 32.0, 42.0, 52.0 62.0),
wherein the first guide means (11.1, 21.1, 31.1, 41.1, 51.1, 61.1) have a first guide surface (12.1, 22.1, 32.1, 42.1, 52.1, 62.1) which guides the guide rail (1) at the first lateral surface (1.1) when applying said guide rail onto the support surface (12.0, 22.0, 32.0, 42.0, 52.0, 62.0), and
wherein the second guide means (11.2, 21.2, 31.2, 41,2 51.2, 61.2) have a second guide surface (12.2, 22.2, 32.2, 42.2, 52.2, 62.2) which guides the guide rail (1) at the second lateral surface (1.2) when applying said guide rail onto the support surface (12.0, 22.0, 32.0, 42.0, 52.0, 62.0), and
wherein the guide means (11.1, 21.1, 31.1, 41.1, 51.1, 61.1; 11.2, 21.2, 31.2, 41.2, 51.2, 61.2) are designed such that when applying the guide rail onto the support surface, said guide means exert in each case constraining forces (F₁, F₂) parallel to the support surface (12.0, 22.0 32.0, 42.0, 52.0, 62.0) onto the first and second lateral surfaces (1.1, 1.2) of the guide rail, which constraining forces (F₁, F₂) force an alignment of the guide rail (1) in such a manner that the guide rail, when being applied onto the support surface, takes the specified position and adopts the specified straight shape.

16. The method according to claim 15, **characterized in that** an at least partially bent sheet metal part (11, 21) is embedded in a support structure (15), wherein a first section (11.1, 21.1) of the sheet metal part (11, 21) forms the first guide surface (12.1, 22.1), a second section (11.1, 21.1) of the sheet metal forms the second guide surface (12.2, 22.2), and a plane section (11.0, 21.0) arranged between the first and the second sections of the sheet metal forms the support surface (12.0, 22.0).

17. The method according to claim 15, **characterized in that** a plurality of sheet metal parts (11) are formed in each case in such a manner that each sheet metal part (11) is bent at least in certain areas and forms in each case a section of the support surface (12.0), a section of the first guide surface (12.1) and/or a section of the second guide surface (12.2), and these sheet metal parts (11) are in each case strung together and fastened to a gage (19) along a straight line and, together with the gage (19), are positioned relative to a base body (5) and are subsequently jointly fixed on the base body (5), wherein the entirety of the sheet metal parts (11) form the first guide surface (12.1), the second guide surface (12.2) and the support surface (12.0).

18. The method according to claim 17, **characterized in that** the base body (5) comprises a spatial area (5.1) which can be filled with a curable casting compound, and that in this spatial area (5.1), the respective sheet metal part (11) is positioned relative to the base body (5) and is subsequently fixed to the base body by casting the casting compound around it.

19. The method according to claim 18, **characterized in that** the casting compound is a mixture of materials for producing a mineral casting body.

## Revendications

1. Structure de fixation (10, 20, 30, 40, 50, 60) pour fixer un rail de guidage (1) d'un système de guidage linéaire à une position prédéterminée dans une forme droite prédéterminée, lequel rail de guidage (1) présente une surface de base (1.0) et une première face latérale (1.1) et une deuxième face latérale (1.2), sachant que les faces latérales (1.1, 1.2) sont formées sur des côtés se faisant face du rail de guidage,
laquelle structure de fixation (10, 20, 30, 40, 50, 60) comprend :
une surface d'appui plane (12.0, 22.0, 32.0, 42.0, 52.0, 62.0) pour le rail de guidage et
des moyens de fixation (16, 17, 18) pour fixer le rail de guidage (1) sur la surface d'appui (12.0, 22.0, 32.0, 42.0, 52.0, 62.0),
sachant que le rail de guidage (1), avant la fixation ou lors de la fixation, peut être amené sur la surface d'appui de telle sorte que la surface de base (1,0) du rail de guidage soit en contact avec la surface d'appui (12.0, 22.0, 32.0, 42.0, 52.0, 62.0),
**caractérisée en ce que**
la structure de fixation (10, 20, 30, 40, 50, 60) comprend des premiers et deuxièmes moyens de guidage (11.1, 21.1, 31.1, 41.1, 51.1, 61.1 ; 11.2, 21.2, 31.2, 41.2, 51.2, 61.2) disposés les uns en face des autres pour guider le rail de guidage le long d'un trajet (C) prédéterminé lorsque l'on pose le rail de guidage (1) sur la surface d'appui (12.0, 22.0, 32.0, 42.0, 52.0, 62.0),
sachant que les premiers moyens de guidage (11.1, 21.1, 31.1, 41.1, 51.1, 61.1) présentent une première surface de guidage (12.1, 22.1, 32.1, 42.1, 52.1, 62.1) qui sert à guider le rail de guidage (1) sur la première face latérale (1.1) lorsqu'on le pose sur la surface d'appui (12.0, 22.0, 32.0, 42.0, 52.0, 62.0), et
sachant que les deuxièmes moyens de guidage (11.2, 21.2, 31.2, 41.2, 51.2, 61.2) présentent une deuxième surface de guidage (12.2, 22.2, 32.2, 42.2, 52.2, 62.2) qui sert à guider le rail de guidage (1) sur la deuxième face latérale (1.2) lorsqu'on le pose sur la surface d'appui (12,0, 22.0, 32.0, 42.0, 52.0, 62.0), et
sachant que les moyens de guidage (11.1, 21.1, 31.1, 41.1, 51.1, 61.1 ; 11.2, 21.2, 31.2, 41.2, 51.2, 61.2) sont ainsi formés que, lorsque l'on pose le rail de guidage sur la surface d'appui, ils exercent respectivement des forces de contrainte (F₁, F₂) parallèlement à la surface d'appui (12.0, 22.0, 32.0, 42.0, 52.0, 62.0) sur les première et deuxième faces latérales (1.1, 1.2) du rail de guidage, lesquelles forces de contrainte (F₁, F₂) forcent un alignement du rail de guidage de telle sorte que le rail de guidage, lorsqu'on le pose sur la surface d'appui, prend la position prédéterminée et adopte la forme droite prédéterminée.

2. Structure de fixation (10, 40, 50, 60) selon la revendication 1, **caractérisée en ce que** la deuxième surface de guidage (12.2, 42.2, 52.2, 62.2) présente une plus grande rigidité que la première surface de guidage (12.1, 42.1, 52.1, 62.1) et forme une butée mécanique avec une arête de butée droite pour la deuxième face latérale (1.2) du rail de guidage
et la première surface de guidage (12.1, 22.1, 42.1, 52.1, 62.1) peut être sortie d'une position de repos prédéterminée lors d'un contact mécanique avec la première face latérale (1.1) du rail de guidage,
sachant que lors de la sortie de la première surface de guidage, des forces de rappel (F₁) sont produites qui agissent contre la sortie respective de la première surface de guidage (12.1, 22.1, 42.1, 52.1, 62.1), et
sachant que le rail de guidage (1) peut être appuyé contre l'arête de butée via les forces de rappel (F₁) agissant sur la première surface de guidage (12.1, 22.1, 42.1, 52.1, 62.1).

3. Structure de fixation (10, 20, 30, 40, 50, 60) selon la revendication 1 ou 2, **caractérisée en ce que**
la première surface de guidage (12.1, 22.1, 42.1, 52.1, 62.1) est disposée de manière élastique ou peut être déformée de manière élastique.

4. Structure de fixation (20, 30) selon la revendication 1 ou 3, **caractérisée en ce que**
les premières et deuxièmes surface de guidage (22.1, 32.1 ; 22.2, 32.2) présentent la même rigidité et sont ainsi disposées que les deux surfaces de guidage peuvent être sorties dans des directions opposées lors d'un contact avec le rail de guidage respectif.

5. Structure de fixation (30, 40, 50) selon l'une des revendications 1 à 4, **caractérisée en ce que**
la surface d'appui (30.0, 40.0, 50.0), la première surface de guidage (30.1, 40.1, 50.1) et la deuxième surface de guidage (30.2, 40.2, 50.2) sont formées dans un corps massif (31, 41, 51) en métal via des moules ou l'usinage du corps.

6. Structure de fixation (30, 40, 50) selon la revendication 5, **caractérisée en ce que**
le corps massif (31, 41, 51) est encastré dans une structure porteuse (5) en fonte minérale.

7. Structure de fixation (10, 20) selon l'une des revendications 1 à 4, **caractérisée en ce qu'**
une pièce de tôle (11, 21) cintrée au moins par tronçons est encastrée dans une structure porteuse (15), sachant que la pièce de tôle (11, 21) comprend la surface d'appui (12.0, 22.0), la première surface de guidage (12.1, 22.1) et la deuxième surface de guidage (12.2, 22.2).

8. Structure de fixation (10, 20) selon l'une des revendications 1 à 4, **caractérisée en ce que**
plusieurs pièces de tôle (11, 21) cintrées au moins par tronçons sont encastrées dans une structure porteuse (15) de telle sorte que les pièces de tôle (11, 21) sont disposées respectivement en enfilade en direction d'une droite (1') et chacune des pièces de tôle (11, 21) forme respectivement une section de la surface d'appui (12.0, 22.0), une section de la première surface de guidage (12.1, 12.1) et/ou une section de la deuxième surface de guidage (12.2, 12.2).

9. Structure de fixation (10, 20) selon l'une des revendications 7-8, **caractérisée en ce que**
la structure porteuse (15) est formée en tant que corps en fonte minérale.

10. Structure de fixation (10, 20) selon l'une des revendications 7 à 9, **caractérisée en ce que** la pièce de tôle (11, 21) comprend :
(i) une section plane (11.0, 21.0) qui forme la surface d'appui ou une section de la surface d'appui,
(ii) une première partie latérale (11.1, 21.1) adjacente à la section plane, disposée dans le sens longitudinal (1') du rail de guidage, qui forme la première surface de guidage (12.1, 22.1) ou une section de la première surface de guidage, et
(iii) une deuxième partie latérale (11.2, 21.2) adjacente à la section plane, disposée dans le sens longitudinal (1') du rail de guidage et faisant face à la première partie latérale, qui forme la deuxième surface de guidage (12.2, 22.2) ou une section de la deuxième surface de guidage,
sachant que les parties latérales (11.1, 11.2; 21.1, 21.2) sont coudées en direction du même côté de la section plane (11.0, 21.0).

11. Structure de fixation (10, 20) selon la revendication 10, **caractérisée en ce que**
la deuxième partie latérale (11.2, 21.2) est appuyée par la structure porteuse (15) sur le côté détourné de la section plane (11.0, 21.0).

12. Structure de fixation (10) selon l'une des revendications 10-11, **caractérisée en ce que**
la première partie latérale (11.1) présente une zone partielle en porte-à-faux (11.1') qui est élastiquement souple transversalement au sens longitudinal du rail de guidage (1).

13. Structure de fixation (10, 20) selon l'une des revendications 10 à 12,
**caractérisée en ce que** la première partie latérale (11.1) et/ou la deuxième partie latérale (11.2) sont courbées en direction de la section plane (11.0) dans un plan transversal au sens longitudinal (1') du rail de guidage.

14. Structure de fixation (10) selon l'une des revendications 10 à 13, **caractérisée en ce que** la partie latérale (11.1) respective présente la forme d'un rouleau.

15. Procédé de fixation d'un rail de guidage (1) d'un système de guidage linéaire à une position prédéterminée en une forme droite prédéterminée, lequel rail de guidage (1) une surface de base (1.0) et des première et deuxième faces latérales (1.1, 1.2), sachant que les faces latérales (1.1, 1.2) sont formées sur des côtés se faisant face du rail de guidage (1),
lequel procédé comprend les étapes suivantes :
(i) préparation d'une structure de fixation (10, 20, 30, 40, 50, 60), laquelle surface de fixation comprend une surface d'appui plane (12.0, 22.0, 32.0, 42.0, 52.0, 62.0) pour le rail de guidage (1) et des moyens de fixation (16, 17, 18) pour fixer le rail de guidage sur la surface d'appui,
(ii) la pose du rail de guidage (1) sur la surface d'appui (12.0, 22.0, 32.0, 42.0, 52.0, 62.0) le long d'un trajet (C) prédéterminé, de telle sorte que la surface de base (1.0) du rail de guidage est amenée en contact avec la surface d'appui (12.0, 22.0, 32.0, 42.0, 52.0, 62.0),
(iii) fixation du rail de guidage (1) via les moyens de fixation (16, 17, 18),
**caractérisé en ce que** l'étape « préparation de la surface de fixation » comprend
que des premiers et deuxièmes moyens de guidage (11.1, 21.1, 31.1, 41.1, 51.1, 61.1 ; 11.2, 21,2, 31.2, 41.2, 51.2, 61.2) disposés les uns en face des autres sont préparés, lesquels guident le rail de guidage (1) au moins le long d'une partie du trajet (C) prédéterminé lorsque l'on pose le rail de guidage (1) sur la surface d'appui (12.0, 22.0, 32.0, 42.0, 52.0, 62.0),
sachant que les premiers moyens de guidage (11.1, 21.1, 31.1, 41.1, 51.1, 61.1) présentent une première surface de guidage (12.1, 22.1, 32.1, 42.1, 52.1, 62.1) qui guide le rail de guidage (1) sur la première face latérale (1.1) lorsqu'on le pose sur la surface d'appui (12.0, 22.0, 32.0, 92.0, 52,0, 62.0), et
sachant que les deuxièmes moyens de guidage (11.2, 21.2, 31.2, 41.2, 51.2, 61.2) présentent une deuxième surface de guidage (12.2, 22.2, 32.2, 42.2, 52.2, 62.2) qui guide le rail de guidage (1) sur la deuxième face latérale (1.2) lorsqu'on le pose sur la surface d'appui (12.0, 22.0, 32.0, 42.0, 52.0, 62.0), et
sachant que les moyens de guidage (11.1, 21.1, 31.1, 41.1, 51.1, 61.1 ; 11.2, 21.2, 31.2, 41.2, 51.2, 61.2) sont ainsi formés que, lorsque l'on pose le rail de guidage sur la surface d'appui, ils exercent respectivement des forces de contrainte (F₁, F₂) parallèlement à la surface d'appui (12.0, 22.0, 32.0, 42.0, 52.0, 62.0) sur les première et deuxième faces latérales (1.1, 1.2) du rail de guidage, lesquelles forces de contrainte (F₁, F₂) forcent un alignement du rail de guidage de telle sorte que le rail de guidage (1), lorsqu'on le pose sur la surface d'appui, prend la position prédéterminée et adopte la forme droite prédéterminée.

16. Procédé selon la revendication 15, **caractérisé en ce qu'**une pièce de tôle (11, 21) cintrée au moins par tronçons est encastrée dans une structure porteuse (15), sachant qu'une première section (11.1, 21.1) de la pièce de tôle (11, 21) forme la première surface de guidage (12.1, 22.1), une deuxième section (11.1, 21.1) de la pièce de tôle forme la deuxième surface de guidage (12.2, 22.2) et une section plane (11.0, 21.0) de la pièce de disposée entre les première et deuxième sections de la pièce de tôle forme la surface d'appui (12.0, 22.0).

17. Procédé selon la revendication 15, **caractérisé en ce que** plusieurs pièces de tôle (11) sont respectivement formées de telle sorte que chaque pièce de tôle (11) est au moins cintrée par tronçons et forme respectivement une section de la surface d'appui (12.0), une section de la première surface de guidage (12.1) et/ou une section de la deuxième surface de guidage (12.2), et ces pièces de tôle (11) sont fixées sur un gabarit (19) respectivement en enfilade le long d'une droite et sont positionnées conjointement avec le gabarit (19) par rapport à un corps de base (5) et sont ensuite fixées ensemble sur le corps de base (5), sachant que la totalité des pièces de tôle (11) forme la première surface de guidage (12.1), la deuxième surface de guidage (12.2) et la surface d'appui (12.0).

18. Procédé selon la revendication 17, **caractérisé en ce que**
le corps de base (5) comprend un espace (5.1) pouvant être rempli avec une masse fondue durcissable et que la pièce de tôle (11) respective est positionnée dans cet espace (5.1) par rapport au corps de base (5) et est ensuite fixée sur le corps de base par transvasement avec la masse fondue.

19. Procédé selon la revendication 18, **caractérisé en ce que** la masse fondue est un mélange de matériaux pour fabriquer un corps en fonte minérale.
